# EUROPEAN PATENT APPLICATION

(11) **EP 4 797 812 A1**
(43) Date of publication of application: **26.08.2026**
(21) Application number: 24890459.1
(22) Date of filing: 24.10.2024
(51) Int. Cl.: H04W 52/02, H04W 24/10

(54) **COMMUNICATION METHOD AND COMMUNICATION APPARATUS**

(30) Priority: 17.11.2023 CN 202311547854
(71) Applicant: HUAWEI TECHNOLOGIES CO., LTD., Shenzhen, Guangdong 518129 (CN)
(72) Inventor: GUAN, Lei, Shenzhen, Guangdong 518129 (CN); XUE, Yifan, Shenzhen, Guangdong 518129 (CN); XUE, Lixia, Shenzhen, Guangdong 518129 (CN)
(74) Representative: Goddar, Heinz J.
(86) International application number: PCT/CN2024/126930
(87) International publication number: WO 2025/103102

(57) **Abstract**

Embodiments of this application disclose a communication method, mainly applied to a scenario in which a low-power wake-up signal (lower-power wake-Up signal, LP-WUS) is combined with cell discontinuous transmission (discontinuous transmission, DTX)/discontinuous reception (discontinuous reception, DRX). In the method, a terminal device may communicate a third signal in a first active time period activated by the low-power wake-up signal, and even outside an active time period for the cell DTX or the cell DRX. Alternatively, it is understood as that a limitation of the cell DTX/DRX on signal transmission in the first active time period corresponding to the wake-up signal is removed, and power consumption of the terminal device, service experience, and power consumption of a network device are considered.

## Description

This application claims priority to Chinese Patent Application No. 202311547854.7, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

As wireless communication has a larger bandwidth and more antennas, base station energy saving and terminal energy saving are hot topics in wireless communication.

A technical characteristic of the base station energy saving is cell discontinuous transmission (discontinuous transmission, DTX)/discontinuous reception (discontinuous reception, DRX). A basic idea is that a base station sends and receives some signals only in a time window that periodically appears, in other words, does not receive or send these signals outside the time window. A technical characteristic of the terminal energy saving is a wake-up signal-based receiving mechanism. A basic idea is that a terminal periodically detects a wake-up signal. Once the wake-up signal triggers the terminal to enable reception, the terminal receives some signals in a next period of time corresponding to the wake-up signal. Otherwise, the terminal does not receive these signals. A terminal device in a low-power wake-up signal (lower-power wake-up signal, LP-WUS) configuration uses a primary and secondary receive link combination mode. A primary link is in an ultra-deep sleep (ultra-deep sleep) state before being woken up by an LP-WUS.

However, currently, there is no technical solution for combining the LP-WUS with the DTX/DRX.

### SUMMARY

Embodiments of this application provide a communication method and a related device. In a scenario in which an LP-WUS is combined with DTX/DRX, a terminal device may communicate a third signal in a first active time period activated by the low-power wake-up signal, and even if the terminal device is outside a second/third active time period for the cell DTX or the cell DRX, the terminal device may also communicate the third signal in the first active time period. Alternatively, it is understood as that a limitation of the cell DTX/DRX on signal transmission in the first active time period corresponding to the wake-up signal is removed, and power consumption of the terminal, service experience, and power consumption of a base station are considered.

A first aspect of this application provides a communication sending method. The method is performed by a terminal device (or a terminal), the method is performed by some components (for example, a processor, a chip, or a chip system) in the terminal device, or the method may be implemented by a logical module or software that can implement all or some functions of the terminal device. In the first aspect and the possible implementations of the first aspect, an example in which the method is performed by the terminal device is used for description. In this method, the terminal device obtains first configuration information and second configuration information, where the first configuration information is used to configure a time domain resource of a first active time period for receiving a low-power wake-up signal LP-WUS by the terminal device, the second configuration information is used to configure a time domain resource of a second active time period for cell discontinuous transmission DTX, and/or a time domain resource of a third active time period for cell discontinuous reception DRX. The terminal device receives the LP-WUS based on the first configuration information, where the LP-WUS is used to activate the first active time period. The terminal device communicates a third signal in a first time period, where the first time period belongs to the first active time period, but does not belong to the second active time period or the third active time period. The terminal device does not receive a first downlink signal outside the second active time period, and the terminal device does not send a second uplink signal outside the third active time period.

That the terminal device communicates a third signal in a first time period, and the first time period belongs to the first active time period but does not belong to the second active time period or the third active time period may also be understood as that a priority of the first active time period is higher than a priority of the second active time period or the third active time period, and may also be understood as that a priority of the LP-WUS is higher than a priority of the cell DTX/DRX.

Based on the foregoing technical solution, in a scenario in which the LP-WUS is combined with the DTX/DRX, the terminal device may communicate the third signal in the first active time period activated by the low-power wake-up signal, and even if the terminal device is outside the active time period for the cell DTX or the cell DRX, the terminal device may also communicate the third signal in the first active time period. Alternatively, it is understood as that a limitation of the cell DTX/DRX on signal transmission in the first active time period corresponding to the wake-up signal is removed, and power consumption of the terminal device, service experience, and power consumption of the network device are considered.

In a possible implementation of the first aspect, the third signal includes a third downlink signal and/or a third uplink signal. That the terminal device communicates the third signal in the first time period includes at least one of the following:

The terminal device receives the third downlink signal in the first time period, where the first time period does not belong to the second active time period.

The terminal device sends the third uplink signal in the first time period, where the first time period does not belong to the third active time period.

Based on the foregoing technical solution, in comparison with this case in which the terminal device cannot receive the signal outside the second active time period or the terminal device cannot send the signal outside the second active time period in a conventional technology, in this manner, the terminal device may receive the third downlink signal outside the second active time period, or send the third uplink signal outside the third active time period. This ensures experience of a delay-sensitive service of the terminal device, and frequent monitoring of the LP-WUS does not significantly increase receiving power consumption of the terminal device. In addition, from a perspective of network device energy saving, the network device may also determine, based on a service type of the terminal device, whether to wake up in a cell inactive time period to serve the terminal device. For example, if a current service of the terminal device is not urgent, the network device may choose not to wake up, but delay service scheduling to a next cell active time period. On the contrary, if a current service of the terminal device is urgent, the network device may choose to wake up immediately, and wake up the terminal device by using an LP-WUS, to receive corresponding service data.

In a possible implementation of the first aspect, the foregoing step further includes: The terminal device does not communicate a fourth signal in a second time period, where the second time period does not belong to the first active time period, but belongs to the second active time period or the third active time period. This step may also be understood as that the terminal device determines not to communicate the fourth signal in the second time period.

This case may also be understood as that a priority of the first active time period is lower than a priority of the second active time period or the third active time period. It may be further understood as that a priority of the LP-WUS is lower than a priority of the cell DTX/DRX.

Based on the foregoing technical solution, from a perspective of the terminal device, the terminal device is already in a low power consumption mode. Although a cell is in the active time period for the DTX, it is possible for a service of another terminal device. Therefore, the terminal device does not need to communicate the fourth signal from a perspective of power consumption saving. In other words, if the terminal device has a service to be transmitted, the network device may continue to extend the previous first active time period or wake up the first active time period of the terminal device by using the LP-WUS. Therefore, an advantage of this solution is that low power consumption of the terminal device is maintained in the second time period.

In a possible implementation of the first aspect, the fourth signal includes a fourth downlink signal and/or a fourth uplink signal. That the terminal device does not communicate the fourth signal in the second time period includes at least one of the following:
The terminal device does not receive the fourth downlink signal in the second time period, where the second time period belongs to the second active time period.

The terminal device does not send the fourth uplink signal in the second time period, where the second time period belongs to the third active time period.

Based on the foregoing technical solution, the terminal device may not receive the fourth downlink signal in the second active time period that does not belong to the first active time period, or may not send the fourth uplink signal in the third active time period that does not belong to the first active time period. Therefore, power consumption of the terminal device in the second time period is reduced, and an energy saving effect of the terminal device is improved.

In a possible implementation of the first aspect, the foregoing step further includes: receiving a fifth signal in a third time period, where the third time period does not belong to the first active time period or the second active time period.

Based on the foregoing technical solution, the terminal device may receive the fifth signal in the third time period that does not belong to the first active time and the second active time period. In addition to ensuring that the signals on which the LP-WUS and the cell DTX/DRX can respectively act are used to reduce power consumption of the terminal and the network device, a limitation of the cell DTX/DRX and the LP-WUS on some signals such as measurement signals and synchronization signals is removed, so that functions such as measurement and synchronization can be maintained while low power consumption is ensured.

A second aspect of this application provides a communication sending method. The method is performed by a network device, the method is performed by some components (for example, a processor, a chip, or a chip system) in the network device, or the method may be implemented by a logical module or software that can implement all or some functions of the network device. In the first aspect and the possible implementations of the first aspect, an example in which the method is performed by the network device is used for description. In this method, the network device sends first configuration information and second configuration information, where the first configuration information is used to configure a time domain resource of a first active time period for receiving a low-power wake-up signal LP-WUS by a terminal device, the second configuration information is used to configure a time domain resource of a second active time period for discontinuous transmission DTX, and/or a time domain resource of a third active time period for discontinuous reception DRX, a first downlink signal is not received outside the second active time period, and a second uplink signal is not sent outside the third active time period. The network device sends the LP-WUS in the time domain resource of the first active time period, where the LP-WUS is used to trigger the first active time period. The network device communicates a third signal in a first time period, where the first time period belongs to the first active time period, but does not belong to the second active time period or the third active time period.

Based on the foregoing technical solution, in a scenario in which the LP-WUS is combined with the DTX/DRX, the network device may communicate the third signal in the first active time period activated by the low-power wake-up signal, and even if the network device is outside the active time period for the cell DTX or the cell DRX, the network device may also communicate the third signal in the first active time period. Alternatively, it is understood as that a limitation of the cell DTX/DRX on signal transmission in the first active time period corresponding to the wake-up signal is removed, and power consumption of the terminal device, service experience, and power consumption of the network device are considered.

In a possible implementation of the second aspect, the third signal includes a third downlink signal and/or a third uplink signal. The communicating the third signal in the first time period includes at least one of the following:
sending the third downlink signal in the first time period, where the first time period does not belong to the second active time period; and
receiving the third uplink signal in the first time period, where the first time period does not belong to the third active time period.

Based on the foregoing technical solution, in comparison with this case in which the terminal device cannot receive the signal outside the second active time period or the terminal device cannot send the signal outside the second active time period in the conventional technology, in this manner, the network device may send the third downlink signal outside the second active time period, or receive the third uplink signal outside the third active time period. This ensures experience of a delay-sensitive service of the terminal device, and frequent monitoring of the LP-WUS does not significantly increase receiving power consumption of the terminal device. In addition, the network device may also determine, based on a service type of the terminal device, whether to wake up in a cell inactive time period to serve the terminal device. For example, if a current service of the terminal device is not urgent, the network device may choose not to wake up, but delay service scheduling to a next cell active time period. On the contrary, if a current service of the terminal device is urgent, the network device may choose to wake up immediately, and wake up the terminal device by using an LP-WUS, to receive corresponding service data.

In a possible implementation of the second aspect, the foregoing step further includes:
skipping communicating a fourth signal in a second time period, where the second time period does not belong to the first active time period, but belongs to the second active time period or the third active time period.

Based on the foregoing technical solution, from a perspective of the terminal device, the terminal device is already in a low power consumption mode. Although a cell is in the active time period for the DTX, it is possible for a service of another terminal device. Therefore, the terminal device does not need to communicate the fourth signal from a perspective of power consumption saving. In other words, if the terminal device has a service to be transmitted, the network device may continue to extend the previous first active time period or wake up the first active time period of the terminal device by using the LP-WUS. Therefore, an advantage of this solution is that low power consumption of the terminal device is maintained in the second time period.

In a possible implementation of the second aspect, the fourth signal includes a fourth downlink signal and/or a fourth uplink signal. The skipping communicating the fourth signal in the second time period includes at least one of the following:
skipping sending the fourth downlink signal in the second time period, where the second time period belongs to the second active time period; and
skipping receiving the fourth uplink signal in the second time period, where the second time period belongs to the third active time period.

Based on the foregoing technical solution, the network device may not send the fourth downlink signal in the second active time period that does not belong to the first active time period, or may not receive the fourth uplink signal in the third active time period that does not belong to the first active time period. Therefore, power consumption of the terminal device in the second time period is reduced, and an energy saving effect of the terminal device is improved.

In a possible implementation of the second aspect, the foregoing step further includes: sending a fifth signal in a third time period, where the third time period does not belong to the first active time period or the second active time period.

Based on the foregoing technical solution, the network device may send the fifth signal in the third time period that does not belong to the first active time and the second active time period. In addition to ensuring that the signals on which the LP-WUS and the cell DTX/DRX can respectively act are used to reduce power consumption of the terminal and the network device, a limitation of the cell DTX/DRX and the LP-WUS on some signals such as measurement signals and synchronization signals is removed, so that functions such as measurement and synchronization can be maintained while low power consumption is ensured.

A third aspect of this application provides a communication sending method. The method is performed by a network device, the method is performed by some components (for example, a processor, a chip, or a chip system) in the network device, or the method may be implemented by a logical module or software that can implement all or some functions of the network device. In the first aspect and the possible implementations of the first aspect, an example in which the method is performed by the network device is used for description. In the method, the network device sends only one of first configuration information and second configuration information, where the first configuration information is used to configure a time domain resource of a first active time period for receiving a low-power wake-up signal LP-WUS by a terminal device, and the second configuration information is used to configure a time domain resource of a third active time period for cell discontinuous transmission DTX.

Based on the foregoing technical solution, the network device may configure only the time domain resource of the first active time period for the terminal device, or configure only the time domain resource of the third active time period for the terminal device, to reduce conflict limitations between the LP-WUS and the cell DTX. Alternatively, it is understood as that the LP-WUS and the cell DTX do not take effect together, so that the network device can avoid introduction of a complex coexistence rule. For example, the network device considers both power consumption of the network device and service experience by selecting or not selecting to wake up the terminal device. Power consumption of the terminal device is mainly ensured by using a low power consumption mode of the LP-WUS.

In a possible implementation of the third aspect, the foregoing step further includes: sending third configuration information when the first configuration information is sent, where the third configuration information is used to configure a time domain resource of a third active time period for discontinuous reception DRX.

Based on the foregoing technical solution, the network device may configure the time domain resource of the first active time period and the time domain resource of the third active time period for the terminal device. In other words, both the LP-WUS and the cell DRX may be configured and take effect.

In any possible implementation of any one of the first aspect to the third aspect, the first downlink signal and the third downlink signal include at least a physical downlink control channel (physical downlink control channel, PDCCH) for data scheduling.

Based on the foregoing technical solution, in a scenario in which the LP-WUS is combined with the cell DTX, in a first time period activated by a low-power wake-up signal, and even outside an active time period for the cell DTX, the terminal device also needs to receive at least the PDCCH for data transmission scheduling in the first time period. A limitation of the cell DTX/DRX on the PDCCH for the data transmission in the first active time period corresponding to the wake-up signal is removed, and power consumption of the terminal device, service experience, and power consumption of the network device are considered.

In any possible implementation of any one of the first aspect to the third aspect, the first downlink signal and the third downlink signal further include at least one of the following: a periodic reference signal CSI-RS used for channel state information (channel state information, CSI) measurement, a semi-persistent scheduling (semi-persistent scheduling, SPS) physical downlink shared channel (physical downlink shared channel, PDSCH), and downlink control information (downlink control information, DCI) in at least one of formats 2_0 to 2_5 carried on a PDCCH.

Based on the foregoing technical solution, in a scenario in which the LP-WUS is combined with the cell DTX, the cell DTX can further act on the first downlink signals, in other words, the first downlink signals are not sent in an inactive time period for the cell DTX. Once the LP-WUS wakes up the first active time period, the terminal device may receive at least one of the third downlink signals in the overlapping first time period. Correspondingly, the network device needs to send the third downlink signals in the first time period. An advantage is as follows: In the first time period woken up by the LP-WUS, the network device wakes up to serve the terminal device. Considering that the network device has woken up, another downlink function, for example, the CSI-RS or the SPS PDSCH, may be restored.

In any possible implementation of any one of the first aspect to the third aspect, the second uplink signal and the third uplink signal include at least one of the following: a scheduling request (scheduling request, SR), periodic channel state information CSI, SPS CSI, a periodic sounding reference signal (sounding reference signal, SRS), and an SPS SRS.

Based on the foregoing technical solution, in a scenario in which the LP-WUS is combined with the cell DRX, similar to the cell DTX, the cell DRX acts on the second uplink signal. To be specific, in an inactive time period for the cell DRX, the network device does not receive the second uplink signal, and the corresponding terminal device does not send the second uplink signal. Similarly, once the LP-WUS wakes up the first time period in the first active time period, considering that the network device wakes up to serve the terminal device, since the network device has woken up, other uplink functions, for example, periodic CSI and SRS reporting, and SR sending, may be recovered.

In any possible implementation of any one of the first aspect to the third aspect, the first downlink signal and the fourth downlink signal include at least a PDCCH for data scheduling.

Based on the foregoing technical solution, in a scenario in which the LP-WUS is combined with the cell DTX, from a perspective of the terminal device, the terminal device is already in a low power consumption mode. Although a cell is in the active time period for the DTX, it is possible for a service of another terminal device. Therefore, the terminal device does not need to receive the PDCCH for the data transmission from a perspective of power consumption saving. In other words, if the terminal device has a service to be transmitted, the network device may continue to extend the previous first active time period or wake up the first active time period of the terminal device by using the LP-WUS. Therefore, an advantage of this solution is that low power consumption of the terminal device is maintained in the second time period.

In any possible implementation of any one of the first aspect to the third aspect, the first downlink signal further includes at least one of the following: a periodic CSI-RS used for CSI measurement, an SPS PDSCH, and DCI in at least one of formats 2_0 to 2_5 carried on a PDCCH.

Based on the foregoing technical solution, in a scenario in which the LP-WUS is combined with the cell DTX, the terminal device is not in the first active time period. To maintain low power consumption of the terminal as much as possible, the terminal may not receive the at least one of these first downlink signals.

In any possible implementation of any one of the first aspect to the third aspect, the fourth downlink signal further includes at least one of the following: a periodic CSI-RS used for CSI measurement, an SPS PDSCH, and DCI in at least one of formats 2_0 to 2_5 carried on a PDCCH.

Based on the foregoing technical solution, in a scenario in which the LP-WUS is combined with the cell DTX, the terminal device is not in the first active time period. To maintain low power consumption of the terminal device as much as possible, the terminal device may not receive at least one of these fourth downlink signals.

In any possible implementation of any one of the first aspect to the third aspect, the fourth downlink signal further includes at least one of the following: a periodic CSI-RS used for CSI measurement, and DCI in at least one of formats 2_0 to 2_5 carried on a PDCCH; and the fourth downlink signal does not include an SPS PDSCH.

Based on the foregoing technical solution, the SPS PDSCH is separately set, that is, the terminal device needs to receive the SPS PDSCH in the second time period. It is considered that the first downlink signals are all signals on which the cell DTX can act. However, the cell DTX is in an active state in the second time period, and these signals should not be limited originally. However, considering that the terminal device is not in the first active time period corresponding to the LP-WUS in this case, all downlink signals except the SPS PDSCH are non-data transmission signals. To maintain low power consumption of the terminal device as much as possible, receiving may not be performed, but the SPS PDSCH is also service data. Therefore, the terminal device may receive the signal, to ensure service experience.

In any possible implementation of any one of the first aspect to the third aspect, the fourth downlink signal does not include a PDCCH for data scheduling.

Based on the foregoing technical solution, in a scenario in which the LP-WUS is combined with the cell DTX, the terminal device may perform an operation in the second time period completely based on the active state of the cell DTX, in other words, the terminal device receives the PDCCH for the data transmission. Although more power consumption of the terminal device is consumed, service experience can be ensured as much as possible.

In any possible implementation of any one of the first aspect to the third aspect, the fourth downlink signal does not include at least one of the following: a periodic CSI-RS used for CSI measurement, an SPS PDSCH, and DCI in at least one of formats 2_0 to 2_5 carried on a PDCCH.

Based on the foregoing technical solution, in a scenario in which the LP-WUS is combined with the cell DTX, the terminal device performs an operation in the second time period completely based on the active state of the cell DTX, in other words, in addition to receiving the PDCCH for the data transmission, the terminal device further receives at least one of the following: a periodic CSI-RS used for CSI measurement, an SPS PDSCH, DCI, and the like. Although more power consumption of the terminal device is consumed, service experience can be ensured as much as possible.

In any possible implementation of any one of the first aspect to the third aspect, the second uplink signal includes at least one of the following: a scheduling request SR, periodic CSI, SPS CSI, a periodic SRS, an SPS SRS, and a grant-free physical uplink shared channel (physical uplink shared channel, PUSCH).

Based on the foregoing technical solution, in a scenario in which the LP-WUS is combined with the cell DRX, the cell DRX can act on the foregoing second uplink signals. In other words, in an inactive time period for the cell DRX, the terminal device does not send the foregoing second uplink signals, and correspondingly the network device does not receive the foregoing second uplink signals.

In any possible implementation of any one of the first aspect to the third aspect, the fourth uplink signal does not include at least one of the following: a scheduling request SR, periodic CSI, SPS CSI, a periodic SRS, an SPS SRS, and a grant-free PUSCH.

Based on the foregoing technical solution, in a scenario in which the LP-WUS is combined with the cell DRX, the terminal device may send these fourth uplink signals in the second time period. It is considered that these uplink signals are signals on which the cell DRX can act, and the second time period is an active time period for the cell DRX. Therefore, the terminal device may send these uplink signals. In this case, for these uplink signals, it is equivalent to that a priority of the cell DRX is higher than that of the first active time period corresponding to the LP-WUS.

In any possible implementation of any one of the first aspect to the third aspect, the fourth uplink signal includes at least one of the following: a scheduling request SR, periodic CSI, SPS CSI, a periodic sounding reference signal SRS, an SPS SRS, and a grant-free PUSCH.

Based on the foregoing technical solution, in a scenario in which the LP-WUS is combined with the cell DRX, the terminal device does not send these fourth uplink signals in the second time period. For these uplink signals, it is equivalent to that a priority of the cell DRX is lower than that of the first active time period corresponding to the LP-WUS. Since the first active time period is in an inactive state, to save energy of the terminal device, the terminal device does not send these fourth uplink signals, even if the cell DRX is in the active time period.

In any possible implementation of any one of the first aspect to the third aspect, the fourth uplink signal includes at least one of the following: periodic CSI, SPS CSI, a periodic sounding reference signal SRS, and an SPS SRS; and the fourth uplink signal does not include at least one of the following: a scheduling request SR and a grant-free PUSCH.

Based on the foregoing technical solution, in a scenario in which the LP-WUS is combined with the cell DRX, in the second time period, the terminal device does not send the at least one of the periodic CSI, the SPS CSI, the periodic SRS, and the SPS SRS, but may send the at least one of the SR and the grant-free PUSCH. This is because both the CSI and the SRS are auxiliary measurement signals. To keep the terminal device in the low power consumption mode, sending may not be performed when it is not ensured that a service arrives. However, the SR and the grant-free PUSCH mean that an uplink service arrives. In this case, the terminal device may send these uplink signals, to ensure service experience.

In any possible implementation of any one of the first aspect to the third aspect, the first downlink signal includes at least one of the following: a PDCCH for data scheduling, a periodic CSI-RS used for CSI measurement, an SPS PDSCH, and DCI in at least one of formats 2_0 to 2_5 carried on a PDCCH.

Based on the foregoing technical solution, in a scenario in which the LP-WUS is combined with the cell DTX, because the third time period is in an inactive state for the cell DTX, the terminal device does not receive the foregoing first downlink signals on which the cell DTX can act. In other words, only downlink signals on which the cell DTX cannot act are concerned, for example, including the PDCCH for the data scheduling, the periodic CSI-RS used for the CSI measurement, the SPS PDSCH, and the DCI in the at least one of formats 2_0 to 2_5 carried on the PDCCH.

In any possible implementation of any one of the first aspect to the third aspect, the fifth signal includes at least one of the following: a CSI-RS used for radio resource management (radio resource management, RRM), radio link monitoring (radio link monitoring, RLM), a tracking reference signal (tracking reference signal, TRS), and beam management, and a positioning reference signal (positioning reference signal, PRS).

Based on the foregoing technical solution, in a scenario in which the LP-WUS is combined with the cell DTX, the cell DTX cannot act on the first downlink signals, and the LP-WUS is mainly for these real-time scheduling signals such as PDCCHs for data transmission. Therefore, the terminal device may receive these fifth signals.

In any possible implementation of any one of the first aspect to the third aspect, the fifth signal includes at least one of the following: a CSI-RS used for RRM, RLM, and beam management, and a PRS; and the fifth signal does not include a CSI-RS used for a TRS.

Based on the foregoing technical solution, in a scenario in which the LP-WUS is combined with the cell DTX, the terminal device may receive the fifth signals, but does not need to receive the TRS. The TRS is mainly used to maintain frequent time-frequency fine synchronization during data transmission. Therefore, in consideration of power consumption of the terminal device, when it is not ensured that a service arrives, such a signal with a short cycle is not received as much as possible.

In any possible implementation of any one of the first aspect to the third aspect, the terminal device is in an RRC connected state.

Based on the foregoing technical solutions, for the RRC connected state, the foregoing solutions are provided by considering a rule of combining the cell DTX/DRX with the LP-WUS.

In any possible implementation of any one of the first aspect to the third aspect, the terminal device is in an idle state, and the first downlink signal includes at least one of the following: a synchronization signal, system information, paging information, a common reference signal, and a common PDCCH;
the second uplink signal includes at least one of the following: random access channel (random access channel, RACH) information, uplink wake-up information, and an uplink reference signal; and
the third signal includes at least one of the following: paging information and RACH information. Specifically, the third downlink signal includes the paging information, and the third uplink signal includes the RACH information.

Based on the foregoing technical solution, the terminal device needs to receive the paging information (which may be a paging PDCCH and/or a paging PDSCH) in the second active time period, because the paging information may be paging information for the terminal device. However, other signals are basically all common signals or broadcast signals. To be specific, the network device sends the other signals, but the terminal device may choose to receive or not to receive the other signals. For example, when the system information does not change, the terminal device does not need to perform receiving again in each second active time period. For another example, the common reference signal is used for measurement. If the terminal device meets a signal or performance requirement, measurement may not need to be frequently performed in each second active time period.

Usually, the network device receives the second uplink signals in the third active time period for the cell DRX, and the terminal device chooses, based on a requirement of the terminal device, to send or not to send the second uplink signals. For example, if the terminal device has an uplink service requirement, the terminal device may choose to send the RACH information (which may be a random access preamble, a random access message, and/or the like) in the third active time period. For another example, if the terminal device intends to obtain system information, the terminal device may choose to send an uplink wake-up signal to the network device, to trigger the network device to send the system information.

Usually, an active cycle of the cell DTX is long. In this case, if the terminal device receives the third signal only in each active time period, a delay is prolonged, thereby affecting service experience. Therefore, the third downlink signal is received in the first time period (that is, the inactive time period corresponding to the cell DTX) triggered by the LP-WUS. This can shorten a receiving delay, to improve service experience, and does not significantly increase receiving power consumption of the terminal device.

Similar to the third downlink signal, an active cycle of cell DDX is long. In this case, if the terminal device sends the third uplink signal (for example, the RACH information) only in each active time period, an access delay is prolonged, thereby affecting service experience. Therefore, the third uplink signal is sent in the first time period (that is, the inactive time period corresponding to the cell DRX) triggered by the LP-WUS. This can shorten a sending delay, to improve service experience, and does not significantly increase receiving power consumption of the terminal device.

In any possible implementation of any one of the first aspect to the third aspect, the third signal further includes at least one of the following: uplink wake-up information and an uplink reference signal.

Based on the foregoing technical solution, the network device receives the second uplink signals in the third active time period for the cell DRX, and the terminal device chooses, based on a requirement of the terminal device, to send or not to send the second uplink signals. For example, if the terminal device has an uplink service requirement, the terminal device may choose to send the RACH information (which may be a random access preamble, a random access message, and/or the like) in the third active time period. For another example, if the terminal device intends to obtain system information, the terminal device may choose to send an uplink wake-up signal to the network device, to trigger the network device to send the system information.

A fourth aspect of this application provides a communication apparatus. The apparatus may implement the method according to any possible implementation of the first aspect. The apparatus includes a corresponding unit or module configured to perform the method. The unit or module included in the apparatus can be implemented by using software and/or hardware. For example, the apparatus may be a terminal device, the apparatus may be a component (for example, a processor, a chip, or a chip system) in the terminal device, or the apparatus may be a logical module or software that can implement all or some functions of the terminal device. In the fourth aspect and the possible implementations of the fourth aspect, an example in which the communication apparatus is the terminal device is used for description.

The apparatus includes a transceiver unit.

The transceiver unit is configured to obtain first configuration information and second configuration information, where the first configuration information is used to configure a time domain resource of a first active time period for receiving a low-power wake-up signal LP-WUS by the terminal device, the second configuration information is used to configure a time domain resource of a second active time period for cell discontinuous transmission DTX, and/or a time domain resource of a third active time period for cell discontinuous reception DRX, a first downlink signal is not received outside the second active time period, and a second uplink signal is not sent outside the third active time period.

The transceiver unit is further configured to receive the LP-WUS based on the first configuration information, where the LP-WUS is used to activate the first active time period.

The transceiver unit is further configured to communicate a third signal in a first time period, where the first time period belongs to the first active time period, but does not belong to the second active time period or the third active time period.

In any possible implementation of the fourth aspect, the third signal includes a third downlink signal and/or a third uplink signal.

That the transceiver unit is further configured to communicate the third signal in the first time period includes at least one of the following:

The transceiver unit is specifically configured to receive the third downlink signal in the first time period, where the first time period does not belong to the second active time period.

The transceiver unit is specifically configured to send the third uplink signal in the first time period, where the first time period does not belong to the third active time period.

In any possible implementation of the fourth aspect, the transceiver unit is further configured to skip communicating a fourth signal in a second time period, where the second time period does not belong to the first active time period, but belongs to the second active time period or the third active time period. Alternatively, the terminal device further includes a processing unit, configured to determine not to communicate a fourth signal in a second time period.

In any possible implementation of the fourth aspect, the fourth signal includes a fourth downlink signal and/or a fourth uplink signal.

That the transceiver unit is further configured to skip communicating the fourth signal in the second time period includes at least one of the following:

The transceiver unit is specifically configured to skip receiving the fourth downlink signal in the second time period, where the second time period belongs to the second active time period.

The transceiver unit is specifically configured to skip sending the fourth uplink signal in the second time period, where the second time period belongs to the third active time period.

In any possible implementation of the fourth aspect, the transceiver unit is specifically configured to receive a fifth signal in a third time period, where the third time period does not belong to the first active time period or the second active time period.

A fifth aspect of this application provides a communication apparatus. The apparatus may implement the method according to any possible implementation of the second aspect or the third aspect. The apparatus includes a corresponding unit or module configured to perform the method. The unit or module included in the apparatus can be implemented by using software and/or hardware. For example, the apparatus may be a network device, the apparatus may be a component (for example, a processor, a chip, or a chip system) in the network device, or the apparatus may be a logical module or software that can implement all or some functions of the network device. In the fifth aspect and the possible implementations of the fifth aspect, an example in which the communication apparatus is the network device is used for description.

The apparatus includes a transceiver unit.

The transceiver unit is configured to send first configuration information and second configuration information, where the first configuration information is used to configure a time domain resource of a first active time period for receiving a low-power wake-up signal LP-WUS by a terminal device, the second configuration information is used to configure a time domain resource of a second active time period for discontinuous transmission DTX, and/or a time domain resource of a third active time period for discontinuous reception DRX, a first downlink signal is not received outside the second active time period, and a second uplink signal is not sent outside the third active time period.

The transceiver unit is further configured to send the LP-WUS in the time domain resource of the first active time period, where the LP-WUS is used to trigger the first active time period.

The transceiver unit is further configured to communicate a third signal in a first time period, where the first time period belongs to the first active time period, but does not belong to the second active time period or the third active time period.

In any possible implementation of the fifth aspect, the third signal includes a third downlink signal and/or a third uplink signal.

That the transceiver unit is further configured to communicate the third signal in the first time period includes at least one of the following:

The transceiver unit is specifically configured to send the third downlink signal in the first time period, where the first time period does not belong to the second active time period.

The transceiver unit is specifically configured to receive the third uplink signal in the first time period, where the first time period does not belong to the third active time period.

In any possible implementation of the fifth aspect, the transceiver unit is further configured to skip communicating a fourth signal in a second time period, where the second time period does not belong to the first active time period, but belongs to the second active time period or the third active time period. Alternatively, the network device further includes a processing unit, configured to determine not to communicate a fourth signal in a second time period.

In any possible implementation of the fifth aspect, the fourth signal includes a fourth downlink signal and/or a fourth uplink signal.

That the transceiver unit is further configured to skip communicating the fourth signal in the second time period includes at least one of the following:

The transceiver unit is specifically configured to skip sending the fourth downlink signal in the second time period, where the second time period belongs to the second active time period.

The transceiver unit is specifically configured to skip receiving the fourth uplink signal in the second time period, where the second time period belongs to the third active time period.

In any possible implementation of the fifth aspect, the transceiver unit is further configured to send a fifth signal in a third time period, where the third time period does not belong to the first active time period or the second active time period.

In any possible implementation of the fourth aspect or the fifth aspect, the first downlink signal and the third downlink signal include at least a PDCCH for data scheduling.

In any possible implementation of the fourth aspect or the fifth aspect, the first downlink signal and the third downlink signal further include at least one of the following: a periodic reference signal CSI-RS used for CSI measurement, an SPS PDSCH, and DCI in at least one of formats 2_0 to 2_5 carried on a PDCCH.

In any possible implementation of the fourth aspect or the fifth aspect, the second uplink signal and the third uplink signal include at least one of the following: a scheduling request SR, periodic CSI, SPS CSI, a periodic SRS, and an SPS SRS.

In any possible implementation of the fourth aspect or the fifth aspect, the first downlink signal and the fourth downlink signal include at least a physical downlink control channel PDCCH for data scheduling.

In any possible implementation of the fourth aspect or the fifth aspect, the first downlink signal further includes at least one of the following: a periodic CSI-RS used for CSI measurement, an SPS PDSCH, and DCI in at least one of formats 2_0 to 2_5 carried on a PDCCH.

In any possible implementation of the fourth aspect or the fifth aspect, the fourth downlink signal further includes at least one of the following: a periodic CSI-RS used for CSI measurement, an SPS PDSCH, and DCI in at least one of formats 2_0 to 2_5 carried on a PDCCH.

In any possible implementation of the fourth aspect or the fifth aspect, the fourth downlink signal further includes at least one of the following: a periodic CSI-RS used for CSI measurement, and DCI in at least one of formats 2_0 to 2_5 carried on a PDCCH; and the fourth downlink signal does not include an SPS PDSCH.

In any possible implementation of the fourth aspect or the fifth aspect, the fourth downlink signal does not include a PDCCH for data scheduling.

In any possible implementation of the fourth aspect or the fifth aspect, the fourth downlink signal does not include at least one of the following: a periodic CSI-RS used for CSI measurement, an SPS PDSCH, and DCI in at least one of formats 2_0 to 2_5 carried on a PDCCH.

In any possible implementation of the fourth aspect or the fifth aspect, the second uplink signal includes at least one of the following: a scheduling request SR, periodic CSI, SPS CSI, a periodic sounding reference signal SRS, an SPS SRS, and a grant-free PUSCH.

In any possible implementation of the fourth aspect or the fifth aspect, the fourth uplink signal does not include at least one of the following: a scheduling request SR, periodic CSI, SPS CSI, a periodic SRS, an SPS SRS, and a grant-free PUSCH.

In any possible implementation of the fourth aspect or the fifth aspect, the fourth uplink signal includes at least one of the following: a scheduling request SR, periodic CSI, SPS CSI, a periodic sounding reference signal SRS, an SPS SRS, and a grant-free PUSCH.

In any possible implementation of the fourth aspect or the fifth aspect, the fourth uplink signal includes at least one of the following: periodic CSI, SPS CSI, a periodic sounding reference signal SRS, and an SPS SRS; and the fourth uplink signal does not include at least one of the following: a scheduling request SR and a grant-free PUSCH.

In any possible implementation of the fourth aspect or the fifth aspect, the first downlink signal includes at least one of the following: a PDCCH for data scheduling, a periodic CSI-RS used for CSI measurement, an SPS PDSCH, and DCI in at least one of formats 2_0 to 2_5 carried on a PDCCH.

In any possible implementation of the fourth aspect or the fifth aspect, the fifth signal includes at least one of the following: a CSI-RS used for RRM, RLM, a TRS, and beam management, and a PRS.

In any possible implementation of the fourth aspect or the fifth aspect, the fifth signal includes at least one of the following: a CSI-RS used for radio resource management RRM, radio link monitoring RLM, and beam management, and a positioning reference signal PRS; and the fifth signal does not include a CSI-RS used for a TRS.

In any possible implementation of the fourth aspect or the fifth aspect, the terminal device is in an RRC connected state.

In any possible implementation of the fourth aspect or the fifth aspect, the terminal device is in an idle state, and the first downlink signal includes at least one of the following: a synchronization signal, system information, paging information, a common reference signal, and a common PDCCH;
the second uplink signal includes at least one of the following: RACH information, uplink wake-up information, and an uplink reference signal; and
the third signal includes at least one of the following: paging information and RACH information. Specifically, the third downlink signal includes the paging information, and the third uplink signal includes the RACH information.

In any possible implementation of the fourth aspect or the fifth aspect, the third signal further includes at least one of the following: uplink wake-up information and an uplink reference signal.

A sixth aspect of this application provides a communication apparatus, including at least one processor, where the at least one processor is coupled to a memory. The memory is configured to store a program or instructions. The at least one processor is configured to execute the program or the instructions, so that the method according to any possible implementation of any one of the first aspect is implemented.

A seventh aspect of this application provides a communication apparatus, including at least one processor, where the at least one processor is coupled to a memory. The memory is configured to store a program or instructions. The at least one processor is configured to execute the program or the instructions, so that the method according to any possible implementation of any one of the second aspect or the third aspect is implemented.

An eighth aspect of this application provides a communication apparatus, including at least one logic circuit and an input/output interface. The logic circuit and the input/output interface are configured to perform the method according to any possible implementation of any one of the first aspect.

A ninth aspect of this application provides a communication apparatus, including at least one logic circuit and an input/output interface. The logic circuit and the input/output interface are configured to perform the method according to any possible implementation of either the second aspect or the third aspect.

A tenth aspect of this application provides a communication apparatus. The communication apparatus includes at least one processor, configured to implement functions in the method according to any possible implementation of any one of the first aspect. The communication apparatus may further include a memory. The memory is configured to store program instructions and data that are necessary for the communication apparatus. Optionally, the communication apparatus further includes an interface circuit, and the communication apparatus provides program instructions and/or data for the at least one processor.

An eleventh aspect of this application provides a communication apparatus. The communication apparatus includes at least one processor, configured to implement functions in the method according to any possible implementation of either the second aspect or the third aspect. The communication apparatus may further include a memory. The memory is configured to store program instructions and data that are necessary for the communication apparatus. Optionally, the communication apparatus further includes an interface circuit, and the communication apparatus provides program instructions and/or data for the at least one processor.

The communication apparatus in the sixth aspect to the eleventh aspect of this application may be a terminal device or a network device, or may be a chip or a chip system in the terminal device or the network device. The chip system may include a chip, or may include a chip and another discrete device.

A twelfth aspect of this application provides a computer-readable storage medium storing one or more computer-executable instructions. When the computer-executable instructions are executed by a processor, the processor performs the method according to any possible implementation of any one of the first aspect to the third aspect.

A thirteenth aspect of this application provides a computer program product (or referred to as a computer program). When the computer program product is executed by a processor, the processor performs the method according to any possible implementation of any one of the first aspect to the third aspect.

A fourteenth aspect of this application provides a communication system. The communication system includes the terminal device in the first aspect and the network device in the second aspect. Alternatively, the communication system includes the terminal device in the first aspect and the network device in the third aspect. Alternatively, the communication system includes the communication apparatus in the sixth aspect and the communication apparatus in the seventh aspect, the communication system includes the communication apparatus in the eighth aspect and the communication apparatus in the ninth aspect, or the communication system includes the communication apparatus in the tenth aspect and the communication apparatus in the eleventh aspect.

For technical effects achieved by any design manner of the fourth aspect to the fourteenth aspect, refer to the technical effects achieved by different design manners of any one of the first aspect to the third aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2 is an example diagram of base station energy saving according to this application;
FIG. 3 is an example diagram of terminal energy saving according to this application;
FIG. 4 is an example diagram of a limitation of an LP-WUS and DTX/DRX according to this application;
FIG. 5 is a schematic flowchart of a communication method according to this application;
FIG. 6 is an example diagram of a first active time period according to this application;
FIG. 7 is an example diagram of combining an LP-WUS with DTX/DRX according to this application;
FIG. 8 is an example diagram of time periods according to this application;
FIG. 9 is another schematic flowchart of a communication method according to this application;
FIG. 10 is another schematic flowchart of a communication method according to this application;
FIG. 11 is another schematic flowchart of a communication method according to this application;
FIG. 12 is a diagram of a communication apparatus according to this application;
FIG. 13 is another diagram of a communication apparatus according to this application;
FIG. 14 is another diagram of a communication apparatus according to this application; and
FIG. 15 is another diagram of a communication apparatus according to this application.

### DESCRIPTION OF EMBODIMENTS

The following clearly and completely describes the technical solutions in embodiments of this application with reference to the accompanying drawings in embodiments of this application.

First, some terms in embodiments of this application are explained and described, to facilitate understanding of a person skilled in the art.

### 1. Communication

The communication is a communication process between a network device and a terminal device. In embodiments of this application, the communication includes sending and/or receiving. In other words, the communication may be sending, or may be receiving, or may include sending and receiving. This is not specifically limited herein.

In addition, the receiving may also be understood as detection, monitoring, or the like. This is not specifically limited herein. For example, receiving DCI usually refers to monitoring the DCI.

### 2. Radio resource control (radio resource control, RRC) state

A terminal device has at least three RRC states: an RRC connected state (connected state), an RRC idle state (idle state), and an inactive state (inactive state).

RRC connected state: A terminal device establishes an RRC connection to a network, and may perform data transmission. The RRC connected state may also be briefly referred to as a connected state. In this specification, "connected state" and "RRC connected state" are a same concept, and the two terms are interchangeable.

RRC idle state: A terminal device does not establish an RRC connection to a network, and a base station does not store a context of the terminal device. If the terminal device needs to enter the RRC connected state from the RRC idle state, the terminal device needs to initiate an RRC connection establishment process. The RRC idle state may also be briefly referred to as an idle state. In this specification, "idle state" and "RRC idle state" are a same concept, and the two terms are interchangeable.

RRC inactive state: A terminal device previously enters an RRC connected state, and then the base station releases an RRC connection, but the base station stores a context of the terminal device. If the terminal device needs to enter the RRC connected state from the RRC inactive state again, the terminal device needs to initiate an RRC resume process (or referred to as an RRC connection resume process). In comparison with the RRC establishment process, the RRC resume process has a shorter delay and lower signaling overheads. However, the base station needs to store the context of the terminal device, causing storage overheads of the base station. The RRC inactive state may also be briefly referred to as an inactive state. In this specification, "inactivation state", "deactivated state", "inactive state", "RRC inactive state", and "RRC deactivated state" are a same concept, and these terms are interchangeable.

### 3. Configuration and preconfiguration

In this application, both the configuration and the preconfiguration are used. The configuration means that a network device/server sends configuration information of some parameters or values of parameters to a terminal via a message or signaling, so that the terminal determines, based on these values or the information, a communication parameter or a resource used for transmission. The preconfiguration is similar to the configuration, and may be parameter information or a parameter value pre-negotiated by the network device/server and the terminal device, or may be parameter information or a parameter value that is used by the base station/network device or the terminal device and that is specified in a standard protocol, or may be parameter information or a parameter value pre-stored in the base station/server or the terminal device. This is not limited in this application.

Further, these values and parameters may be changed or updated.

4. Terms "system" and "network" may be used interchangeably in embodiments of this application. "At least one" means one or more, and "a plurality of" means two or more. "And/or" describes an association relationship between associated objects, and indicates that three relationships may exist. For example, A and/or B may represent the following cases: Only A exists, only B exists, both A and B exist, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and/or C" may indicate that only A exists, only B exists, only C exists, both A and B exist, both A and C exist, both B and C exist, and both A, B, and C exist. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In this application, unless otherwise specified, for same or similar parts in embodiments, refer to each other. In embodiments of this application and methods/designs/implementations in embodiments, unless otherwise specified or logic conflicts occur, terms and/or descriptions are consistent and may be mutually referenced between different embodiments and between the methods/designs/implementations in embodiments, and technical features in the different embodiments and the methods/designs/implementations in embodiments may be combined to form a new embodiment, method, or implementation based on an internal logical relationship thereof. The following implementations of this application are not intended to limit the protection scope of this application.

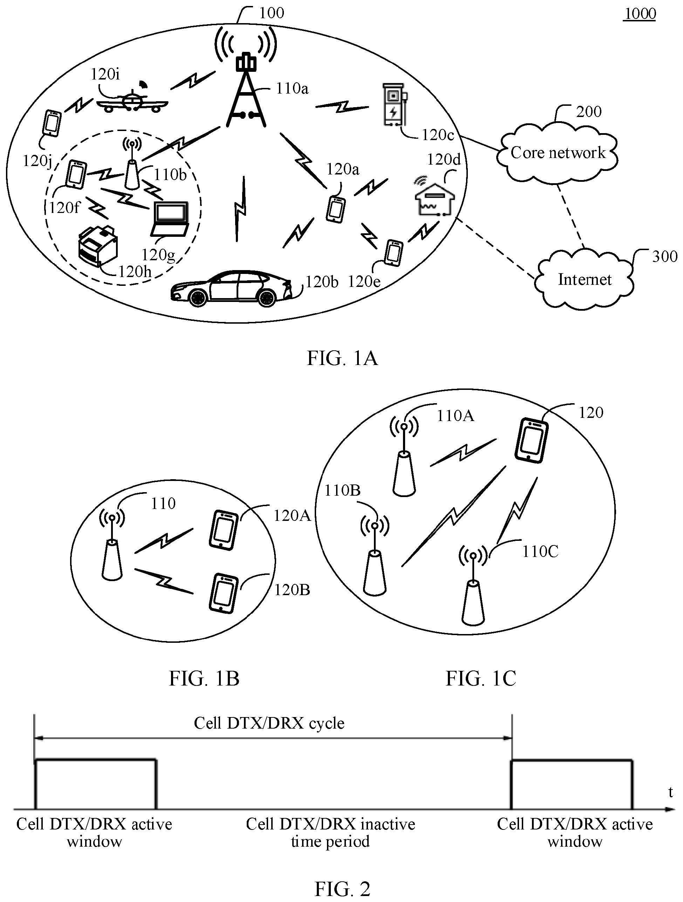

FIG. 1A is a diagram of an architecture of a communication system 1000 to which an embodiment of this application is applied. As shown in FIG. 1A, the communication system includes a radio access network (radio access network, RAN) 100 and a core network 200. Optionally, the communication system 1000 may further include an internet 300. The RAN 100 includes at least one RAN node (for example, 110a and 110b in FIG. 1A, collectively referred to as 110), and may further include at least one terminal (for example, 120a to 120j in FIG. 1A, collectively referred to as 120). The RAN 100 may also include another RAN node, for example, a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner and RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1A), or may be a micro base station or an indoor base station (for example, 110b in FIG. 1A), or may be a relay node or a donor node.

In another application scenario, a plurality of RAN nodes may cooperate to help a terminal implement radio access, and different RAN nodes separately implement some functions of the base station. For example, the RAN node may be a central unit (central unit, CU), a distributed unit (distributed unit, DU), a radio unit (radio unit, RU), or the like. The CU herein completes functions about a radio resource control protocol and a packet data convergence protocol (packet data convergence protocol, PDCP) of the base station, and may further complete a function about a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application.

In addition, the RAN node may also be referred to as a network device, and the network device is an apparatus that is deployed in a radio access network to provide a wireless communication function for a terminal device. The network device may include macro base stations, micro base stations (also referred to as small cells), relay stations, and access points in various forms. In systems using different radio access technologies, names of the network device may be different, for example, an eNB or an eNodeB (evolved NodeB) in long term evolution (Long Term Evolution, LTE). The network device may alternatively be a radio controller in a cloud radio access network (cloud radio access network, CRAN) scenario. Alternatively, the network device may be a base station device in a 5G network or a network device in a future evolved PLMN network. Alternatively, the network device may be a wearable device or a vehicle-mounted device. Alternatively, the network device may be a transmission reception point (transmission reception point, TRP). In addition, in a network structure, the network device may include a central unit (central unit, CU) node, a distributed unit (distributed unit, DU) node, or a RAN device including a CU node and a DU node. For ease of description, the following is described by using an example in which the base station is used as a RAN node.

The terminal is a device having a wireless transceiver function, and may send a signal to the base station or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor device or an outdoor device, a handheld device, or a vehicle-mounted device; may be deployed on a water surface; or may be deployed on a plane, a balloon, and a satellite. Application scenarios of the base station and the terminal are not limited in embodiments of this application.

Roles of the base station and the terminal may be relative roles. For example, a helicopter or an uncrewed aerial vehicle 120i in FIG. 1A may be configured as a mobile base station. For a terminal 120j accessing the radio access network 100 through 120i, the terminal 120i is a base station. However, for a base station 110a, 120i is a terminal. To be specific, 110a and 120i communicate with each other through a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b in FIG. 1A each may be referred to as a communication apparatus having a base station function, and 120a to 120j in FIG. 1A each may be referred to as a communication apparatus having a terminal function.

Communication between the base station and the terminal, between base stations, or between terminals may be performed on a licensed spectrum, or may be performed on an unlicensed spectrum, or may be performed on both the licensed spectrum and the unlicensed spectrum. Communication may be performed on a spectrum below 6 gigahertz (gigahertz, GHz), may be performed on a spectrum above 6 GHz, or may be performed on both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A terminal function may be performed by a module (for example, a chip or a modem) in the terminal, or may be performed by an apparatus including the terminal function.

It may be understood that, as described above, the RAN 100 includes at least one RAN node (for example, 110a and 110b in FIG. 1A, collectively referred to as 110), and may further include at least one terminal (for example, 120a to 120j in FIG. 1A, collectively referred to as 120).

In a possible implementation, the communication system shown in FIG. 1A may alternatively be shown in FIG. 1B, that is, include one RAN node 110 and a plurality of terminals (for example, 120A and 120B in FIG. 1B). In this case, a single RAN node may transmit data or control signaling to one or more terminals.

In another possible implementation, the communication system shown in FIG. 1A may alternatively be shown in FIG. 1C, that is, include a plurality of RAN nodes (for example, 110A, 110B, and 110C in FIG. 1C) 110 and one terminal 120. In this case, the plurality of RAN nodes may also simultaneously transmit data or control signaling to a single terminal.

As wireless communication has a larger bandwidth and more antennas, base station energy saving and terminal energy saving are hot topics in wireless communication.

A technical characteristic of the base station energy saving is cell DTX/DRX. A basic idea is that the base station sends and receives some signals only in a time window that periodically appears, in other words, does not receive or sending these signals outside the time window.

For example, as shown in FIG. 2, the base station communicates data only in a cell DTX/DRX active window in a cell DTX/DRX cycle, and does not communicate data in a cell DTX/DRX inactive time period in the cell DTX/DRX cycle, thereby implementing the base station energy saving.

A technical characteristic of the terminal energy saving is a wake-up signal-based receiving mechanism. A basic idea is that a terminal periodically detects a wake-up signal. Once the wake-up signal triggers the terminal to enable reception, the terminal receives some signals in a next period of time corresponding to the wake-up signal. Otherwise, the terminal does not receive these signals. The terminal energy saving may also be referred to as connected discontinuous reception (connected discontinuous reception, C-DRX).

Optionally, a terminal in a low-power wake-up signal (lower-power wake-up signal, LP-WUS) configuration uses a primary and secondary receive link combination mode. A primary link is in an ultra-deep sleep (ultra-deep sleep) state before being woken up by an LP-WUS.

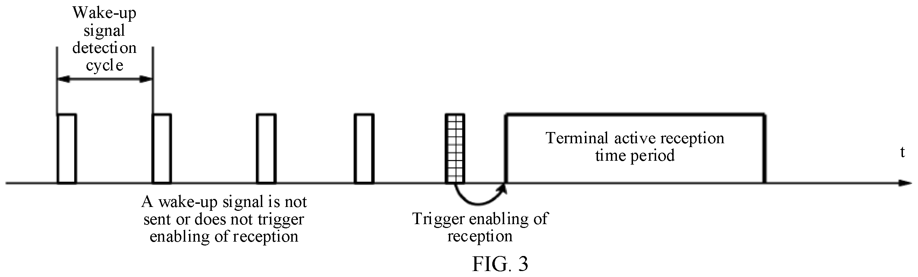

For example, as shown in FIG. 3, the terminal detects a wake-up signal in a wake-up signal detection cycle. If the terminal does not receive the wake-up signal, the terminal is not activated to receive data. If the terminal receives the wake-up signal, the terminal is triggered to enable reception, and receive data in a terminal active reception time period.

When the base station energy saving and the terminal energy saving coexist, a PDCCH can be received only in an intersection time period of a cell DTX active window and a terminal C-DRX active window. In conclusion, a main limitation is that the terminal cannot receive the PDCCH in a cell DTX inactive time period, even if terminal C-DRX is in an active time period. In addition, in the inactive time period for the cell DRX, the base station cannot receive uplink transmission of the terminal. Therefore, in a scenario in which an LP-WUS is combined with DTX/DRX, how to reduce transmission limitations while ensuring energy saving is a technical problem that urgently needs to be resolved.

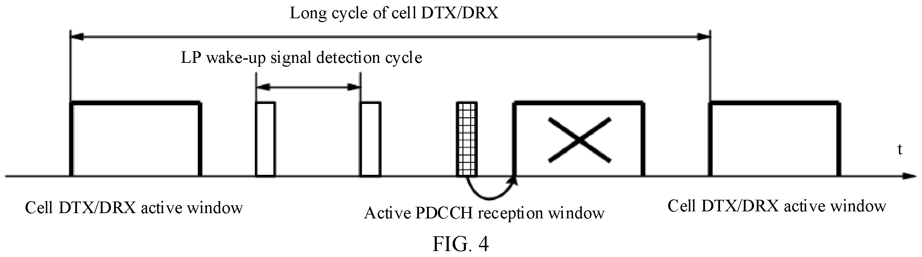

For example, as shown in FIG. 4, once a long cycle of cell DTX/DRX is configured, even if the low-power wake-up signal can wake up a corresponding reception time window in time, the reception time window is still limited by an active time period for the cell DTX/DRX. As a result, the terminal still cannot receive a PDCCH for data transmission scheduling in time.

To resolve the foregoing technical problem, embodiments of this application provide a communication method and a related device. In a scenario in which an LP-WUS is combined with DTX/DRX, a terminal device may communicate a third signal in a first active time period activated by the low-power wake-up signal, and even if the terminal device is outside an active time period for the cell DTX or the cell DRX, the terminal device may also communicate the third signal in the first active time period. Alternatively, it is understood as that a limitation of the cell DTX/DRX on signal transmission in the first active time period corresponding to the wake-up signal is removed, and power consumption of the terminal, service experience, and power consumption of a base station are considered.

The following describes the communication method provided in embodiments of this application. The method may be performed by a terminal device/network device, or may be performed by a component (for example, a processor, a chip, or a chip system) in the terminal device/network device. Certainly, the method may alternatively be performed by a system including a network device and a terminal device.

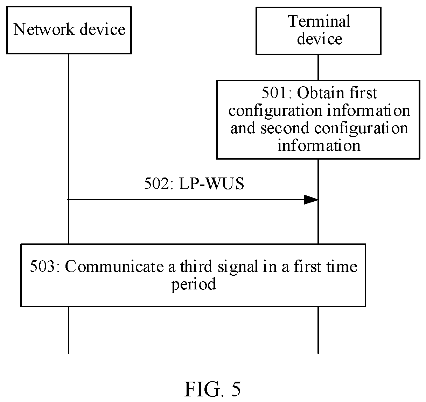

FIG. 5 is a schematic flowchart of a communication method according to an embodiment of this application. The method may include step 501 to step 503. Step 501 to step 503 may be performed by a terminal device or a network device, may be performed by a part of components (for example, a processor, a chip, or a chip system) in the terminal device or the network device, or may be implemented by a logical module or software that can implement all or some functions of the terminal device. The following uses an example in which the method is performed by the terminal device or the network device for description. Processing performed by a single execution body in step 501 to step 503 may also be divided into processing performed by a plurality of execution bodies, and these execution bodies may be logically and/or physically separated. For example, processing performed by the network device may be performed by at least one of a CU, a DU, and an RU. The following describes step 501 to step 503 in detail.

Step 501: The terminal device obtains first configuration information and second configuration information.

In this embodiment of this application, the terminal device obtains the first configuration information and the second configuration information in a plurality of manners: The terminal device may receive the first configuration information and the second configuration information that are sent by the network device, the terminal device may prestore the first configuration information and the second configuration information, the first configuration information and the second configuration information may be preconfigured, or the like. This is not specifically limited herein.

In this embodiment of this application, the first configuration information is used to configure a time domain resource of a first active time period for receiving an LP-WUS by the terminal device, and the second configuration information is used to configure a time domain resource of a second active time period for cell DTX, and/or a time domain resource of a third active time period for cell DRX.

Optionally, the first configuration information may be further used to configure a frequency domain resource of the first active time period for receiving the LP-WUS by the terminal device. Specifically, the frequency domain resource may include a cycle, a time-frequency start location, and the like.

Further, if a specific sequence is used to generate a binary on-off keying (on-off keying, OOK) waveform, sequence information and the like may be further configured. OOK may also be referred to as binary amplitude shift keying (binary amplitude shift keying, 2ASK).

In addition, that the terminal device does not receive a first downlink signal outside the second active time period, and the terminal device does not send a second uplink signal outside the third active time period may be understood as that the terminal device receives the first downlink signal in the second active time period, and the terminal device sends the second uplink signal in the third active time period.

Optionally, the terminal device receives the first configuration information and the second configuration information that are sent by the network device. Correspondingly, the network device sends the first configuration information and the second configuration information to the terminal device.

Further, for a terminal device in an RRC connected state, an LP-WUS is mainly used to wake up a corresponding first active time period, so that the terminal device receives a PDCCH for data transmission scheduling in the first active time period. On the contrary, if the corresponding first active time period is not woken up, the terminal device may skip the first active time period, that is, does not need to receive the PDCCH for data transmission scheduling.

It may be understood that the active time period in embodiments of this application may also be referred to as an active time window, an active window, or the like. This is not specifically limited herein.

Step 502: The network device sends the LP-WUS to the terminal device.

The network device sends the LP-WUS to the terminal device, and correspondingly, the terminal device receives the LP-WUS sent by the network device. The LP-WUS is used to activate a first time period, or it is understood as that the LP-WUS is used to trigger the first active time period.

Optionally, when configuring the first configuration information for the terminal device, the network device sends the LP-WUS in the time domain resource of the first active time period. Correspondingly, the terminal device receives the LP-WUS based on the first configuration information. Specifically, the terminal device determines, based on the first configuration information, the time domain resource and/or the frequency domain resource for receiving the LP-WUS, so that the terminal device receives, in the time domain resource and/or the frequency domain resource for receiving the LP-WUS, the LP-WUS sent by the network device.

For example, the first active time period may be the terminal active reception time period in FIG. 3.

In addition, a moment at which the terminal device receives the LP-WUS may be the same as or different from a start moment of the first active time period corresponding to the LP-WUS.

Optionally, there may be a specific time domain offset between the moment at which the terminal device receives the LP-WUS and the start moment of the first active time period corresponding to the LP-WUS, for example, including processing time of the LP-WUS and switching time of switching to a normal receiver (or referred to as a main receiver, a main link receiver, or the like). The time domain offset may be predefined or notified to the terminal device via signaling. This is not specifically limited herein.

In a possible implementation, the first active time period is predefined or notified to the terminal device in advance via signaling. In this case, once the LP-WUS triggers the first active time period, the terminal device receives the PDCCH in the first active time period. Then, after the first active time period expires, the terminal device enters a low power consumption mode again, or receives specific indication signaling from the network device to enter the low power consumption mode again. For example, a length of the first active time period may alternatively be configured to be infinite. This means that the terminal device keeps receiving a signal such as a PDCCH in a normal receiver mode provided that the terminal device does not receive the specific indication signaling.

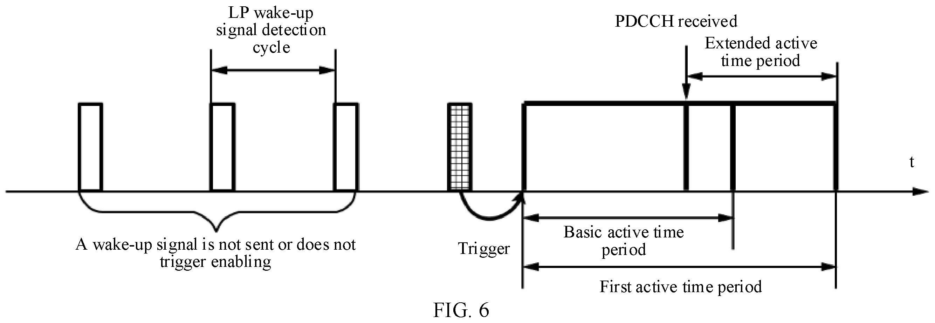

In another possible implementation, the first active time period includes a basic active time period and an extended active time period, and the basic active time period and the extended active time period may overlap or not overlap. In this case, the basic active time period is defined as the first active time period above. If the terminal device does not receive a PDCCH in the basic active time period after the LP-WUS triggers the first active time period, the terminal device enters a low power consumption mode again after the basic active time period expires. However, if receiving a PDCCH in the basic active time period (as shown in FIG. 6), the terminal device immediately starts a timer for the extended the active time period, and continues to receive a PDCCH in a period for which the timer does not return to zero (that is, in the extended active time period). In addition, each time a PDCCH is received, the timer is reset (that is, an extended active time period is started again) until the timer returns to zero. In this case, the terminal device enters a low power consumption mode again.

It should be noted that both the basic active time period and the extended active time period are considered as the first active time period triggered by or corresponding to the LP-WUS in this embodiment of this application. Actually, strictly speaking, the extended active time period is obtained through extension by using the timer when the PDCCH is received again after the LP-WUS triggers activation. However, in this embodiment of this application, it is considered that the LP-WUS initially activates the basic active time period, and the PDCCH is received in the basic active time period to obtain the extended active time period. Therefore, in this embodiment of this application, for ease of description, unless otherwise specified, the basic active time period and the extended active time period are considered as the scope of the first active time period triggered by or corresponding to the LP-WUS.

Step 503: The network device and the terminal device communicate a third signal in the first time period.

The first time period in this embodiment of this application belongs to the first active time period, but does not belong to the second active time period or the third active time period. In other words, the first active time period for the LP-WUS is triggered, but the second active time period for the cell DTX is not triggered, or the third active time period for the cell DRX is not triggered.

In this embodiment of this application, this case in which the network device and the terminal device communicate the third signal in the first time period includes at least one of the following: transmitting a third uplink signal and transmitting a third downlink signal. To be specific, the terminal device sends the third uplink signal to the network device, and the network device sends the third downlink signal to the terminal device. Alternatively, it is understood as that this case in which the network device and the terminal device communicate the third signal in the first time period includes at least one of the following: a scenario in which the LP-WUS is combined with the cell DTX, and a scenario in which the LP-WUS is combined with the cell DRX. Descriptions are separately provided below.

A first case is the scenario in which the LP-WUS is combined with the cell DTX.

In this case, this step includes: The terminal device receives a third downlink signal in the first time period, where the first time period belongs to the first active time period and does not belong to the second active time period. Correspondingly, the network device sends the third downlink signal in the first time period.

This case may also be understood as that a priority of the first active time period is higher than a priority of the second active time period. It may be further understood as that a priority of the LP-WUS is higher than a priority of the cell DTX. It may be further understood as that the first time period is a time period in the first active time period other than the second active time period. It may be further understood as that the first active time period corresponding to the LP-WUS is in an active state, and the second active time period corresponding to the cell DTX is in an inactive state.

Optionally, the terminal device receives, in the first time period, the third downlink signal sent by the network device. Correspondingly, the network device sends the third downlink signal to the terminal device in the first time period.

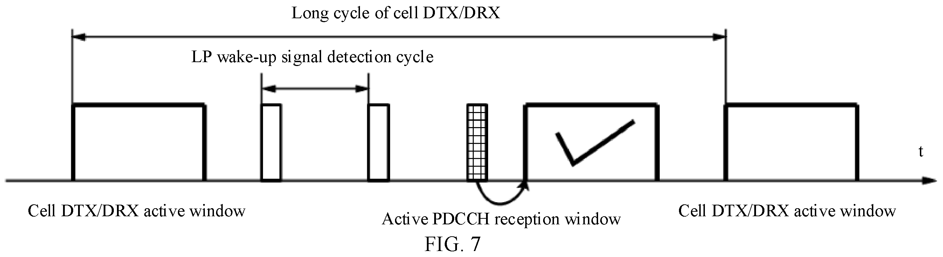

Example 1: The first downlink signal and the third downlink signal include at least a PDCCH for data scheduling, and the like. In this example, a mechanism conflict between the LP-WUS and the cell DTX can be resolved. As shown in FIG. 7, in comparison with impact of FIG. 4 on a service delay, a solution in FIG. 7 ensures experience of a delay-sensitive service of the terminal device, and frequent monitoring of the LP-WUS does not significantly increase receiving power consumption of the terminal device. In addition, from a perspective of network device energy saving, the network device may also determine, based on a service type of the terminal device, whether to wake up in a cell inactive time period to serve the terminal device. For example, if a current service of the terminal device is not urgent, the network device may choose not to wake up, but delay service scheduling to a next cell active time period. On the contrary, if a current service of the terminal device is urgent, the network device may choose to wake up immediately, and wake up the terminal device by using an LP-WUS, to receive a PDCCH and corresponding service data. In conclusion, in this embodiment of this application, a limitation of the cell DTX/DRX on transmission in the active time period corresponding to the wake-up signal in an existing mechanism is removed, and aspects such as power consumption of the terminal device, service experience, and power consumption of a network device are considered.

It should be noted that, that the signal mentioned in the foregoing example includes a channel may be understood as that the signal includes a signal carried on the channel. For example, that the first downlink signal includes the PDCCH for the data scheduling may be understood as that the first downlink signal includes a signal that is carried on the PDCCH and that is used for the data scheduling.

Example 2: The first downlink signal and the third downlink signal further include at least one of the following: a periodic CSI-RS used for CSI measurement, an SPS PDSCH, DCI in at least one of formats 2_0 to 2_5 carried on a PDCCH, and the like. Specifically, the cell DTX can further act on the foregoing first downlink signals, that is, these first downlink signals are not sent in an inactive time period for the cell DTX. Once the LP-WUS wakes up the first active time period, the terminal device may receive at least one of these third downlink signals in the overlapping first time period. Correspondingly, the network device needs to send these corresponding signals in the first time period. An advantage is as follows: In the first time period woken up by the LP-WUS, the network device wakes up to serve the terminal device. In this case, considering that the network device has woken up, a downlink function other than the PDCCH for the data transmission, for example, the CSI-RS, the SPS PDSCH, or the DCI in the at least one of formats 2_0 to 2_5 carried on the PDCCH, may be restored.

It should be noted that Example 1 and Example 2 may exist independently, or may exist in combination. For example, in addition to the PDCCH for the data transmission in Example 1, another downlink signal in Example 2 is further considered.

It may be understood that Example 1 and Example 2 are merely described by using an example in which the first downlink signal and the third downlink signal are a same signal. In actual application, the first downlink signal may alternatively be different from the third downlink signal. This is not specifically limited herein. For example, the third downlink signal may be a part of the first downlink signal, for example, a signal with a higher priority.

In addition, Example 1 and Example 2 are merely examples of the common downlink signals. In actual application, the first downlink signal and the third downlink signal may alternatively be in another case. This is not specifically limited herein.

A second case is the scenario in which the LP-WUS is combined with the cell DRX.

In this case, this step includes: The terminal device sends a third uplink signal in the first time period, where the first time period belongs to the first active time period and does not belong to the third active time period. Correspondingly, the network device receives the third uplink signal in the first time period.

This case may also be understood as that a priority of the first active time period is higher than a priority of the third active time period. It may be further understood as that a priority of the LP-WUS is higher than a priority of the cell DRX. It may be further understood as that the first time period is a time period in the first active time period other than the third active time period. It may be further understood as that the first active time period corresponding to the LP-WUS is in an active state, and the third active time period corresponding to the cell DRX is in an inactive state.

Optionally, the terminal device sends the third uplink signal to the network device in the first time period. Correspondingly, the network device receives the third uplink signal sent by the terminal device in the first time period.

Example 3: The second uplink signal and the third uplink signal include at least one of the following: an SR, periodic CSI, SPS CSI, a periodic SRS, an SPS SRS, and the like. Similar to the cell DTX in the foregoing first case, the cell DRX acts on the second uplink signal. To be specific, in an inactive time period for the cell DRX, the network device does not receive the second uplink signal, and the corresponding terminal device does not send the second uplink signal. Similarly, once the LP-WUS wakes up the first time period in the first active time period, considering that the network device wakes up to serve the terminal device, since the network device has woken up, other uplink functions, for example, periodic CSI and SRS reporting, and SR sending, may be recovered.

It may be understood that Example 3 is merely described by using an example in which the second uplink signal and the third uplink signal are a same signal. In actual application, the second uplink signal may alternatively be different from the third uplink signal. This is not specifically limited herein. For example, the third downlink signal may be a part of the second downlink signal, for example, a signal with a higher priority.

In addition, Example 3 is merely an example of the common uplink signals. In actual application, the second uplink signal and the third uplink signal may alternatively be in another case. This is not specifically limited herein.

It should be noted that the foregoing first case and the foregoing second case may exist independently (to be specific, the scenario in which the LP-WUS is combined with the cell DTX, or the scenario in which the LP-WUS is combined with the cell DRX), or may exist simultaneously (to be specific, the LP-WUS may exist together with the cell DTX and the cell DRX). This is not specifically limited herein.

In addition, Example 1 to Example 3 are examples in which the terminal device is in the RRC connected state. The following uses each signal of the terminal device in an RRC idle state (which may also be referred to as an idle state) as an example.

Example 4: The first downlink signal includes at least one of the following: a synchronization signal, system information, paging information, a common reference signal, and a common PDCCH. Usually, the network device sends these first downlink signals in the second active time period for the cell DTX, and whether the terminal device receives these signals in the time period needs to be separately discussed. Specifically, the terminal device needs to receive the paging information (which may be a paging PDCCH and/or a paging PDSCH) in the second active time period, because the paging information may be paging information for the terminal device. However, other signals are basically all common signals or broadcast signals. To be specific, the network device sends the other signals, but the terminal device may choose to receive or not to receive the other signals. For example, when the system information does not change, the terminal device does not need to perform receiving again in each second active time period. For another example, the common reference signal is used for measurement. If the terminal device meets a signal or performance requirement, measurement may not need to be frequently performed in each second active time period.

Example 5: The second uplink signal includes at least one of the following: random access channel RACH information, uplink wake-up information, and an uplink reference signal. Usually, the network device receives these second uplink signals in the third active time period for the cell DRX, and the terminal device chooses, based on a requirement of the terminal device, to send or not to send these second uplink signals. For example, if the terminal device has an uplink service requirement, the terminal device may choose to send the RACH information (which may be a random access preamble, a random access message, and/or the like) in the third active time period. For another example, if the terminal device intends to obtain system information, the terminal device may choose to send an uplink wake-up signal to the network device, to trigger the network device to send the system information.

Example 6: The third signal includes at least one of the following: paging information and RACH information.

When the third signal includes the paging information, usually, an active cycle of the cell DTX is long. In this case, if the terminal device receives the third signal only in each active time period, a delay is prolonged, thereby affecting service experience. Therefore, the third downlink signal is received in the first time period (that is, the inactive time period corresponding to the cell DTX) triggered by the LP-WUS. This can shorten a receiving delay, to improve service experience, and does not significantly increase receiving power consumption of the terminal device.

When the third signal includes the RACH information, similar to the third downlink signal, an active cycle of the cell DRX is long. In this case, if the terminal device sends the third uplink signal (for example, the RACH information) only in each active time period, an access delay is prolonged, thereby affecting service experience. Therefore, the third uplink signal is sent in the first time period (that is, the inactive time period corresponding to the cell DRX) triggered by the LP-WUS. This can shorten a sending delay, to improve service experience, and does not significantly increase receiving power consumption of the terminal device.

Further, the third signal may further include at least one of the following: uplink wake-up information and an uplink reference signal.

It should be noted that Example 4 to Example 6 may exist independently, or at least two of Example 4 to Example 6 may exist simultaneously. This is not specifically limited herein.

In this embodiment of this application, in the scenario in which the LP-WUS is combined with the DTX/DRX, the terminal device may communicate the third signal in the first active time period activated by the low-power wake-up signal, and even if the terminal device is outside the active time period for the cell DTX or the cell DRX, the terminal device may also communicate the third signal in the first active time period. Alternatively, it is understood as that a limitation of the cell DTX/DRX on signal transmission in the first active time period corresponding to the wake-up signal is removed, and power consumption of the terminal device, service experience, and power consumption of the network device are considered.

For ease of understanding, the following describes time periods in this embodiment of this application, for example, the first time period in step 503 and the subsequent optional second time period and third time period, by using an example in which the second active time period for the cell DTX is completely aligned with the third active time period for the cell DRX.

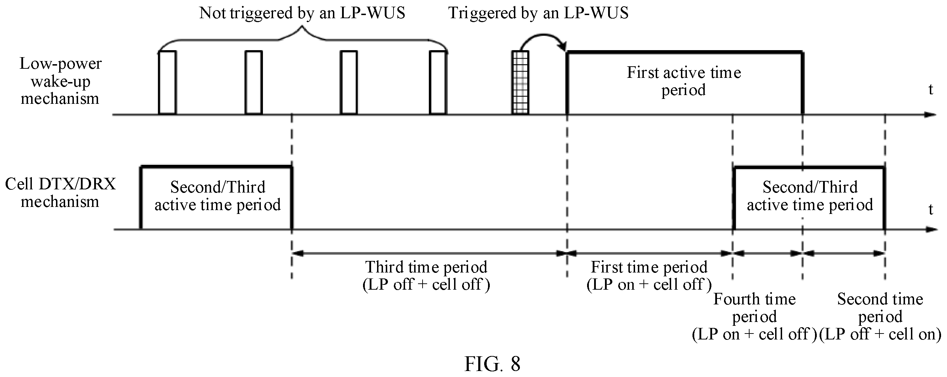

For example, as shown in FIG. 8, in a low-power wake-up mechanism, the terminal device triggers the first active time period after receiving the LP-WUS. In a cell DTX/DRX mechanism, the cell DTX corresponds to the second active time period, and the cell DRX corresponds to the third active time period, which are collectively referred to as a second/third active time period herein.

The first time period belongs to the first active time period, but does not belong to the second active time period or the third active time period. The first time period may also be referred to as LP on + cell off. LP on corresponds to a case that the first active time period for the LP-WUS is triggered, and cell off corresponds to a case that the second active time period for the cell DTX is not triggered and/or the third active time period for the cell DRX is not triggered.

The second time period does not belong to the first active time period, but belongs to the second active time period or the third active time period. It may also be understood as that the first active time period corresponding to the LP-WUS is in an inactive state, and the second/third active time period corresponding to the cell DTX/DRX is in an active state. The second time period may also be referred to as LP off + cell on. LP off corresponds to a case that the first active time period for the LP-WUS is not triggered, and cell on corresponds to a case that the second active time period for the cell DTX is triggered and/or the third active time period for the cell DRX is triggered.

The third time period does not belong to the first active time period or the second active time period. It may also be understood as that the first active time period corresponding to the LP-WUS is in an inactive state, and the second/third active time period corresponding to the cell DTX/DRX is in an inactive state. The third time period may also be referred to as LP off + cell off. LP off corresponds to a case that the first active time period for the LP-WUS is not triggered, and cell off corresponds to a case that the second active time period for the cell DTX is not triggered and/or the third active time period for the cell DRX is not triggered.

The fourth time period belongs to the first active time period and the second active time period. It may also be understood as that the first active time period corresponding to the LP-WUS is in an active state, and the second/third active time period corresponding to the cell DTX/DRX is in an active state. The third time period may also be referred to as LP on + cell on. LP on corresponds to a case that the first active time period for the LP-WUS is triggered, and cell on corresponds to a case that the second active time period for the cell DTX is triggered and/or the third active time period for the cell DRX is triggered.

It may be understood that the second/third active time period of a cell shown in FIG. 8 is merely an example. In actual application, the cell DTX and the cell DRX may be configured independently, or even only one of the cell DTX and the cell DRX is configured. When the active time periods for the cell DTX and the cell DRX are not aligned, for example, the active time periods for the cell DTX and the cell DRX do not overlap at all or partially overlap, this embodiment of this application is still applicable. This is because FIG. 8 is merely for ease of understanding, only a rule of combining the LP-WUS mechanism with each of the cell DTX and DRX is considered, and there is no direct relationship with various configurations of the cell DTX and DRX. Another case of the second/third active time period of the cell is not limited herein.

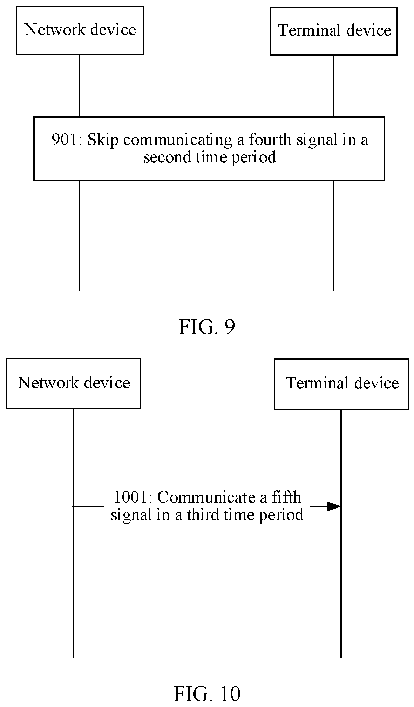

The following describes a status of communication between the network device and the terminal device in the second time period with reference to FIG. 9. A status of communication between the network device and the terminal device in the third time period is described with reference to FIG. 10.

FIG. 9 is another schematic flowchart of a communication method according to an embodiment of this application. The method may include step 901. Step 901 may be performed by a terminal device or a network device, may be performed by a part of components (for example, a processor, a chip, or a chip system) in the terminal device or the network device, or may be implemented by a logical module or software that can implement all or some functions of the terminal device. The following uses an example in which the method is performed by the terminal device or the network device for description. Processing performed by a single execution body in step 901 may also be divided into processing performed by a plurality of execution bodies, and these execution bodies may be logically and/or physically separated. For example, processing performed by the network device may be performed by at least one of a CU, a DU, and an RU. The following describes step 901 in detail.

Step 901: The network device and the terminal device does not communicate a fourth signal in a second time period.

That the network device and the terminal device do not communicate a fourth signal in a second time period may also be understood as that the network device and/or the terminal device determine/determines not to communicate the fourth signal in the second time period.

The second time period in this embodiment of this application does not belong to a first active time period, but belongs to a second active time period or a third active time period. In other words, the first active time period for an LP-WUS is not triggered, but the second active time period for cell DTX is triggered and/or the third active time period for cell DRX is triggered.

In this embodiment of this application, this case in which the network device and the terminal device skip communicating a fourth signal in a second time period includes at least one of the following: skipping transmitting a fourth uplink signal, and skipping transmitting a fourth downlink signal. To be specific, the terminal device does not send the fourth uplink signal to the network device, and the network device does not send the fourth downlink signal to the terminal device. Alternatively, it is understood as that this case in which the network device and the terminal device skip communicating a fourth signal in a second time period includes at least one of the following: a scenario in which the LP-WUS is combined with the cell DTX, and a scenario in which the LP-WUS is combined with the cell DRX. Descriptions are separately provided below.

A first case is the scenario in which the LP-WUS is combined with the cell DTX.

In this case, this step includes: The terminal device does not receive the fourth downlink signal in the second time period. Alternatively, it is understood as that the terminal device determines not to receive the fourth downlink signal in the second time period. The second time period does not belong to the first active time period, but belongs to the second active time period. Correspondingly, the network device does not send the fourth downlink signal in the second time period.

This case may also be understood as that a priority of the first active time period is lower than a priority of the second active time period. It may be further understood as that a priority of the LP-WUS is lower than a priority of the cell DTX. It may be further understood as that the second time period is a time period in the second active time period other than the first active time period. It may be further understood as that the first active time period corresponding to the LP-WUS is in an inactive state, and the second active time period corresponding to the cell DTX is in an active state.

Optionally, the terminal device does not receive, in the second time period, the fourth downlink signal sent by the network device. Correspondingly, the network device does not send the fourth downlink signal to the terminal device in the first time period.

Example 7: The first downlink signal and the fourth downlink signal include at least a PDCCH for data scheduling, and the like. In this example, a mechanism conflict between the LP-WUS and the cell DTX can be resolved. From a perspective of the terminal device, the terminal device is already in a low power consumption mode. Although a cell is in the active time period for the DTX, it is possible for a service of another terminal device. Therefore, the terminal device does not need to receive the PDCCH for the data transmission from a perspective of power consumption saving. In other words, if the terminal device has a service to be transmitted, the network device may continue to extend the previous first active time period or wake up the first active time period of the terminal device by using the LP-WUS. Therefore, an advantage of this solution is that low power consumption of the terminal device is maintained in the second time period.

Example 8: The first downlink signal and the fourth downlink signal further include at least one of the following: a periodic CSI-RS used for CSI measurement, an SPS PDSCH, DCI in at least one of formats 2_0 to 2_5 carried on a PDCCH, and the like. Although these signals are not limited by the cell DTX in this case, the signals are not in the first active time period of the terminal device. To maintain low power consumption of the terminal as much as possible, the terminal may not receive the at least one of these fourth downlink signals.

Example 9: The first downlink signal includes at least one of the following: a periodic CSI-RS used for CSI measurement, an SPS PDSCH, DCI in at least one of formats 2_0 to 2_5 carried on a PDCCH, and the like. The fourth downlink signal further includes at least one of the following: a periodic CSI-RS used for CSI measurement, and DCI in at least one of formats 2_0 to 2_5 carried on a PDCCH. However, the fourth downlink signal does not include an SPS PDSCH. In this example, the SPS PDSCH is separately set, that is, the terminal device needs to receive the SPS PDSCH in the second time period. It is considered that the first downlink signals are all signals on which the cell DTX can act. However, the cell DTX is in an active state in the second time period, and these signals should not be limited originally. However, considering that the terminal device is not in the first active time period corresponding to the LP-WUS in this case, all downlink signals other than the SPS PDSCH are non-data transmission signals. To maintain low power consumption of the terminal device as much as possible, receiving may not be performed, but the SPS PDSCH is also service data. Therefore, the terminal device may receive the signal, to ensure service experience.

Example 10: The first downlink signal includes at least one of the following: a periodic CSI-RS used for CSI measurement, an SPS PDSCH, DCI in at least one of formats 2_0 to 2_5 carried on a PDCCH, and the like. The fourth downlink signal does not include a PDCCH for data scheduling. In this example, the terminal device may perform an operation in the second time period completely based on the active state of the cell DTX, in other words, the terminal device receives the PDCCH for the data transmission. Although more power consumption of the terminal device is consumed, service experience can be ensured as much as possible.

In addition, Example 7 to Example 10 are merely examples of the common downlink signals. In actual application, the first downlink signal and the fourth downlink signal may alternatively be in another case. This is not specifically limited herein.

A second case is the scenario in which the LP-WUS is combined with the cell DRX.

In this case, this step includes: The terminal device does not send the fourth uplink signal in the second time period, or it is understood as that the terminal device determines not to send the fourth uplink signal in the second time period. The second time period does not belong to the first active time period, but belongs to the third active time period.

This case may also be understood as that a priority of the first active time period is lower than a priority of the third active time period. It may be further understood as that a priority of the LP-WUS is lower than a priority of the cell DRX. It may be further understood that a third time period is a time period in the third active time period other than the first active time period. It may be further understood as that the first active time period corresponding to the LP-WUS is in an inactive state, and the third active time period corresponding to the cell DRX is in an active state.

Optionally, the terminal device does not send the fourth uplink signal to the network device in the third time period. Correspondingly, the network device does not receive, in the third time period, the fourth uplink signal sent by the terminal device.

Example 11: The second uplink signal includes at least one of the following: a scheduling request SR, periodic CSI, SPS CSI, a periodic SRS, an SPS SRS, and a grant-free PUSCH. That is, the cell DRX can act on the second uplink signals. In an inactive time period for the cell DRX, the terminal device does not send the second uplink signals, and correspondingly the network device does not receive the second uplink signals. The fourth uplink signal does not include at least one of the following: a scheduling request SR, periodic CSI, SPS CSI, a periodic SRS, an SPS SRS, and a grant-free PUSCH. In this example, the terminal device may send these fourth uplink signals in the second time period. It is considered that these uplink signals are signals on which the cell DRX can act, and the second time period is an active time period for the cell DRX. Therefore, the terminal device may send these uplink signals. In this case, for these uplink signals, it is equivalent to that a priority of the cell DRX is higher than that of the first active time period corresponding to the LP-WUS.

Example 12: The second uplink signal includes at least one of the following: a scheduling request SR, periodic CSI, SPS CSI, a periodic SRS, an SPS SRS, and a grant-free PUSCH. That is, the cell DRX can act on the second uplink signals. In an inactive time period for the cell DRX, the terminal device does not send the second uplink signals, and correspondingly the network device does not receive the second uplink signals. The fourth uplink signal includes at least one of the following: a scheduling request SR, periodic CSI, SPS CSI, a periodic sounding reference signal SRS, an SPS SRS, and a grant-free PUSCH. In this example, the second uplink signal may be the same as the fourth uplink signal. The terminal device does not send these fourth uplink signals in the second time period. For these fourth uplink signals, it is equivalent to that a priority of the cell DRX is lower than that of the first active time period corresponding to the LP-WUS. Since the first active time period is in an inactive state, to save energy of the terminal device, the terminal device does not send these fourth uplink signals, even if the cell DRX is in the active time period.

Example 13: The second uplink signal includes at least one of the following: a scheduling request SR, periodic CSI, SPS CSI, a periodic SRS, an SPS SRS, and a grant-free PUSCH. That is, the cell DRX can act on the second uplink signals. In an inactive time period for the cell DRX, the terminal device does not send the second uplink signals, and correspondingly the network device does not receive the second uplink signals. The fourth uplink signal includes at least one of the following: periodic CSI, SPS CSI, a periodic sounding reference signal SRS, and an SPS SRS. However, the fourth uplink signal does not include at least one of the following: a scheduling request SR and a grant-free PUSCH. In this example, in the second time period, the terminal device does not send the at least one of the periodic CSI, the SPS CSI, the periodic SRS, and the SPS SRS, but may send the at least one of the SR and the grant-free PUSCH. This is because both the CSI and the SRS are auxiliary measurement signals. To keep the terminal device in a low power consumption mode, sending may not be performed when it is not ensured that a service arrives. However, the SR and the grant-free PUSCH mean that an uplink service arrives. In this case, the terminal device may send these uplink signals, to ensure service experience.

In addition, Example 11 to Example 13 are merely examples of the common uplink signals. In actual application, the second uplink signal and the fourth uplink signal may alternatively be in another case. This is not specifically limited herein.

It should be noted that the foregoing first case and the foregoing second case may exist independently (to be specific, the scenario in which the LP-WUS is combined with the cell DTX, or the scenario in which the LP-WUS is combined with the cell DRX), or may exist simultaneously (to be specific, the LP-WUS may exist together with the cell DTX and the cell DRX). This is not specifically limited herein.

In this embodiment of this application, from a perspective of the terminal device, the terminal device is already in the low power consumption mode. Although the cell is in the active time period for the DTX, it is possible for a service of another terminal device. Therefore, the terminal device does not need to communicate the fourth signal from a perspective of power consumption saving. In other words, if the terminal device has a service to be transmitted, the network device may continue to extend the previous first active time period or wake up the first active time period of the terminal device by using the LP-WUS. Therefore, an advantage of this solution is that low power consumption of the terminal device is maintained in the second time period.

FIG. 10 is another schematic flowchart of a communication method according to an embodiment of this application. The method may include step 1001. Step 1001 may be performed by a terminal device or a network device, may be performed by a part of components (for example, a processor, a chip, or a chip system) in the terminal device or the network device, or may be implemented by a logical module or software that can implement all or some functions of the terminal device. The following uses an example in which the method is performed by the terminal device or the network device for description. Processing performed by a single execution body in step 1001 may also be divided into processing performed by a plurality of execution bodies, and these execution bodies may be logically and/or physically separated. For example, processing performed by the network device may be performed by at least one of a CU, a DU, and an RU. The following describes step 1001 in detail.

Step 1001: The network device and the terminal device communicate a fifth signal in a third time period.

The third time period in this embodiment of this application does not belong to a first active time period and a second active time period. In other words, the first active time period for an LP-WUS is not triggered, and the second active time period for cell DTX is not triggered.

In this embodiment of this application, this case in which the network device and the terminal device communicate a fifth signal in a third time period includes at least one of the following: transmitting a fifth uplink signal and transmitting a fifth downlink signal. To be specific, the terminal device sends the fifth uplink signal to the network device, and the network device sends the fifth downlink signal to the terminal device. Alternatively, it is understood as that this case in which the network device and the terminal device communicate a fifth signal in a first time period includes at least one of the following: a scenario in which the LP-WUS is combined with the cell DTX, and a scenario in which the LP-WUS is combined with cell DRX. Descriptions are separately provided below.

A first case is the scenario in which the LP-WUS is combined with the cell DTX.

Example 14: The first downlink signal includes at least one of the following: a PDCCH for data scheduling, a periodic CSI-RS used for CSI measurement, an SPS PDSCH, and DCI in at least one of formats 2_0 to 2_5 carried on a PDCCH. The fifth signal includes at least one of the following: a CSI-RS used for RRM, RLM, a TRS, and beam management, and a PRS. In this example, the cell DTX cannot act on the first downlink signals, and the LP-WUS is mainly for these real-time scheduling signals such as PDCCHs for data transmission. Therefore, the terminal device may receive these fifth signals.

Example 15: The first downlink signal includes at least one of the following: a PDCCH for data scheduling, a periodic CSI-RS used for CSI measurement, an SPS PDSCH, and DCI in at least one of formats 2_0 to 2_5 carried on a PDCCH. The fifth signal includes at least one of the following: a CSI-RS used for RRM, RLM, and beam management, and a PRS. However, the fifth signal does not include a CSI-RS used for a TRS. Different from Example 14, the terminal device may receive these fifth signals, but does not need to receive the TRS. The TRS is mainly used to maintain frequent time-frequency fine synchronization during data transmission. Therefore, in consideration of power consumption of the terminal device, when it is not ensured that a service arrives, such a signal with a short cycle is not received as much as possible.

In addition, Example 14 and Example 15 are merely examples of the common downlink signals. In actual application, the first downlink signal and the fifth signal may alternatively be in another case. This is not specifically limited herein.

A second case is the scenario in which the LP-WUS is combined with the cell DRX.

Example 16: The second uplink signal includes at least one of the following: a scheduling request SR, periodic CSI, SPS CSI, a periodic SRS, an SPS SRS, and a grant-free PUSCH. In this example, the cell DRX can act on these second uplink signals. In other words, in an inactive time period for the cell DRX, the terminal device does not send these second uplink signals, and correspondingly the network device does not receive these second uplink signals.

It is considered that the second uplink signals cannot be sent in the inactive time period for the cell DRX, and signals that can be sent are basically uplink signals for dynamic service scheduling, for example, a PUSCH for data transmission, a hybrid automatic repeat request acknowledgment (hybrid automatic repeat request acknowledgement, HARQ-ACK), and aperiodic CSI and SRS reporting. These dynamically triggered uplink signals are usually sent when the first active time period for which a service arrives is active, and therefore do not appear in the third time period.

In addition, Example 16 is merely an example of the common uplink signal. In actual application, the second uplink signal may alternatively be in another case. This is not specifically limited herein.

It should be noted that the foregoing first case and the foregoing second case may exist independently (to be specific, the scenario in which the LP-WUS is combined with the cell DTX, or the scenario in which the LP-WUS is combined with the cell DRX), or may exist simultaneously (to be specific, the LP-WUS may exist together with the cell DTX and the cell DRX). This is not specifically limited herein.

In this embodiment of this application, the network device may send the fifth signal in the third time period that does not belong to the first active time and the second active time period. Therefore, a limitation of the cell DTX/DRX and the LP-WUS is removed, so that experience of a delay-sensitive service of the terminal device can be ensured. For example, in a first time period activated by a power wake-up signal, and even outside an active time period for the cell DTX, the terminal device also needs to receive at least some downlink signals such as paging information in the first time period. In this manner, a limitation of the cell DTX/DRX on paging information in the active time period corresponding to the wake-up signal is removed, and power consumption of the terminal device, service experience, and power consumption of the network device are considered.

In the embodiments shown in FIG. 5 to FIG. 10, a limitation between the LP-WUS and the cell DTX/DRX in the conventional technology from a priority perspective is mainly resolved. The following describes, from a configuration perspective, how to resolve the limitation between the LP-WUS and the cell DTX/DRX in the conventional technology.

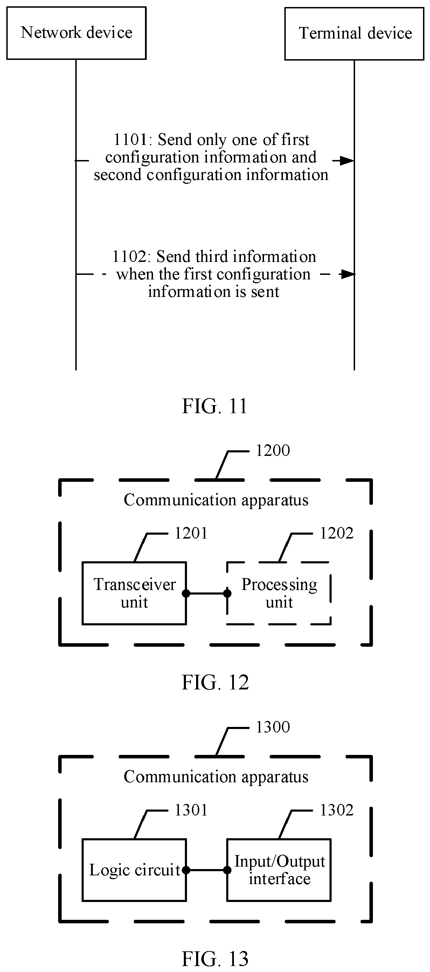

FIG. 11 is a schematic flowchart of a communication method according to an embodiment of this application. The method may include step 1101 and step 1102. Step 1101 and step 1102 may be performed by a terminal device or a network device, may be performed by a part of components (for example, a processor, a chip, or a chip system) in the terminal device or the network device, or may be implemented by a logical module or software that can implement all or some functions of the terminal device. The following uses an example in which the method is performed by the terminal device or the network device for description. Processing performed by a single execution body in step 1101 and step 1102 may also be divided into processing performed by a plurality of execution bodies, and these execution bodies may be logically and/or physically separated. For example, processing performed by the network device may be performed by at least one of a CU, a DU, and an RU. The following describes step 1101 and step 1102 in detail.

Step 1101: The network device sends only one of first configuration information and second configuration information to the terminal device.

That the network device sends only one of first configuration information and second configuration information to the terminal device may be understood as that if the network device sends the first configuration information to the terminal device, the network device does not send the second configuration information to the terminal device; and/or if the network device sends the second configuration information to the terminal device, the network device does not send the first configuration information to the terminal device. Herein, "sending to the terminal device" may also be understood as "determining to send to the terminal device", and/or "skipping sending to the terminal device" may also be understood as "determining not to send to the terminal device". The first configuration information is used to configure a time domain resource of a first active time period for receiving a low-power wake-up signal LP-WUS by the terminal device, and the second configuration information is used to configure a time domain resource of a third active time period for cell discontinuous transmission DTX. Alternatively, it is understood as that the terminal device does not expect that both the LP-WUS and cell DTX are configured and take effect. Alternatively, it is understood as that configuration information configured by the network device for the terminal device includes the first configuration information, but does not include the second configuration information. Alternatively, configuration information configured by the network device for the terminal device includes the second configuration information, but does not include the first configuration information.

Specifically, considering that a cycle of the LP-WUS is much shorter than that of the cell DTX, once an LP-WUS function is configured and takes effect, a base station may choose or not choose to wake up the terminal at any time. Therefore, a cell DTX function may not need to be configured.

For the first configuration information and the second configuration information in this embodiment of this application, refer to the descriptions in the embodiments shown in FIG. 5 to FIG. 10. Details are not described herein again.

Step 1102: The network device sends third configuration information to the terminal device when the first configuration information is sent. This step is an optional step.

When the first configuration information is sent, that the network device sends third configuration information to the terminal device may be understood as that the network device may send the third configuration information to the terminal device even if the network device sends the first configuration information to the terminal device. Herein, "sending the first configuration information to the terminal device" may also be understood as "determining to send the first configuration information to the terminal device", and/or "sending the third configuration information to the terminal device" may also be understood as "determining to send the third configuration information to the terminal device". "When the first configuration information is sent" does not mean that the sending of the third configuration information by the network device to the terminal device depends on the sending of the first configuration information, but means that the sending of the first configuration information does not conflict with the sending of the third configuration information.

In this case, the network device may configure the time domain resource of the first active time period and the time domain resource of the third active time period for the terminal device. In other words, both the LP-WUS and the cell DRX may be configured and take effect. Alternatively, it is understood as that the terminal device does not expect that both the LP-WUS and the cell DTX are configured and take effect, but may expect that both the configured LP-WUS and the cell DRX are configured and take effect.

For a case in which the LP-WUS is combined with the cell DRX in this embodiment of this application, refer to the descriptions in the embodiments shown in FIG. 5 to FIG. 10. Details are not described herein again.

It may be understood that, when step 1102 exists, there may be no time sequence limitation between step 1101 and step 1102. For example, the network device first sends the third configuration information, and then sends the first configuration information. For another example, the network device first sends the first configuration information, and then sends the third configuration information. For another example, the network device simultaneously sends the first configuration information and the third configuration information.

In this embodiment of this application, the network device may configure only the time domain resource of the first active time period for the terminal device, or configure only the time domain resource of the third active time period for the terminal device, to reduce conflict limitations between the LP-WUS and the cell DTX. Alternatively, it is understood as that the LP-WUS and the cell DTX do not take effect together, so that the network device can avoid introduction of a complex coexistence rule. For example, the network device considers both power consumption of the network device and service experience by selecting or not selecting to wake up the terminal device. Power consumption of the terminal device is mainly ensured by using a low power consumption mode of the LP-WUS.

When the technical solutions in embodiments of this application do not conflict with each other, embodiments may be combined with each other. For example, in the embodiment shown in FIG. 11, when both the LP-WUS and the cell DRX are configured and take effect, at least one of the following steps may be further included: The network device sends the LP-WUS to the terminal device, the network device and the terminal device communicate a third signal in a first time period, the network device and the terminal device do not communicate a fourth signal in a second time period, and the network device and the terminal device communicate a fifth signal in a third time period. For details, refer to the descriptions in the embodiments shown in FIG. 5 to FIG. 10. Details are not described herein again.

The foregoing describes the communication sending methods in embodiments of this application. The following describes communication apparatuses in embodiments of this application. FIG. 12 shows an embodiment of a communication apparatus 1200 in embodiments of this application. The communication apparatus 1200 can implement functions of the communication apparatus (the communication apparatus is a terminal device) in the foregoing method embodiments, and therefore can also implement the beneficial effects of the foregoing method embodiments. In this embodiment of this application, the communication apparatus 1200 may be a communication apparatus, or may be an integrated circuit, an element, or the like inside the communication apparatus, for example, a chip. The communication apparatus 1200 includes a transceiver unit 1201. Optionally, the communication apparatus 1200 may further include a processing unit 1202.

In a possible implementation, the communication apparatus 1200 is the terminal device in the embodiments shown in FIG. 1A to FIG. 11. In this case, functions of the units are as follows:
The transceiver unit 1201 is configured to obtain first configuration information and second configuration information, where the first configuration information is used to configure a time domain resource of a first active time period for receiving a low-power wake-up signal LP-WUS by the terminal device, the second configuration information is used to configure a time domain resource of a second active time period for cell discontinuous transmission DTX, and/or a time domain resource of a third active time period for cell discontinuous reception DRX, a first downlink signal is not received outside the second active time period, and a second uplink signal is not sent outside the third active time period.

The transceiver unit 1201 is further configured to receive the LP-WUS based on the first configuration information, where the LP-WUS is used to activate the first active time period.

The transceiver unit 1201 is further configured to communicate a third signal in a first time period, where the first time period belongs to the first active time period, but does not belong to the second active time period or the third active time period.

Optionally, the third signal includes a third downlink signal and/or a third uplink signal.

That the transceiver unit 1201 is further configured to communicate the third signal in the first time period includes at least one of the following:
The transceiver unit 1201 is specifically configured to receive the third downlink signal in the first time period, where the first time period does not belong to the second active time period.

The transceiver unit 1201 is specifically configured to send the third uplink signal in the first time period, where the first time period does not belong to the third active time period.

Optionally, the transceiver unit 1201 is further configured to skip communicating a fourth signal in a second time period, where the second time period does not belong to the first active time period, but belongs to the second active time period or the third active time period. Alternatively, the processing unit 1202 is configured to determine not to communicate a fourth signal in a second time period.

Optionally, the fourth signal includes a fourth downlink signal and/or a fourth uplink signal.

That the transceiver unit 1201 is further configured to skip communicating the fourth signal in the second time period includes at least one of the following:
The transceiver unit 1201 is specifically configured to skip receiving the fourth downlink signal in the second time period, where the second time period belongs to the second active time period.

The transceiver unit 1201 is specifically configured to skip sending the fourth uplink signal in the second time period, where the second time period belongs to the third active time period.

Optionally, the transceiver unit 1201 is specifically configured to receive a fifth signal in a third time period, where the third time period does not belong to the first active time period or the second active time period.

Optionally, the first downlink signal and the third downlink signal include at least a PDCCH for data scheduling.

Optionally, the first downlink signal and the third downlink signal further include at least one of the following: a periodic reference signal CSI-RS used for CSI measurement, an SPS PDSCH, and DCI in at least one of formats 2_0 to 2_5 carried on a PDCCH.

Optionally, the second uplink signal and the third uplink signal include at least one of the following: a scheduling request SR, periodic CSI, SPS CSI, a periodic SRS, and an SPS SRS.

Optionally, the first downlink signal and the fourth downlink signal include at least a physical downlink control channel PDCCH for data scheduling.

Optionally, the first downlink signal further includes at least one of the following: a periodic CSI-RS used for CSI measurement, an SPS PDSCH, and DCI in at least one of formats 2_0 to 2_5 carried on a PDCCH.

Optionally, the fourth downlink signal further includes at least one of the following: a periodic CSI-RS used for CSI measurement, an SPS PDSCH, and DCI in at least one of formats 2_0 to 2_5 carried on a PDCCH.

Optionally, the fourth downlink signal further includes at least one of the following: a periodic CSI-RS used for CSI measurement, and DCI in at least one of formats 2_0 to 2_5 carried on a PDCCH; and the fourth downlink signal does not include an SPS PDSCH.

Optionally, the fourth downlink signal does not include a PDCCH for data scheduling.

Optionally, the fourth downlink signal does not include at least one of the following: a periodic CSI-RS used for CSI measurement, an SPS PDSCH, and DCI in at least one of formats 2_0 to 2_5 carried on a PDCCH.

Optionally, the second uplink signal includes at least one of the following: a scheduling request SR, periodic CSI, SPS CSI, a periodic sounding reference signal SRS, an SPS SRS, and a grant-free PUSCH.

Optionally, the fourth uplink signal does not include at least one of the following: a scheduling request SR, periodic CSI, SPS CSI, a periodic SRS, an SPS SRS, and a grant-free PUSCH.

Optionally, the fourth uplink signal includes at least one of the following: a scheduling request SR, periodic CSI, SPS CSI, a periodic sounding reference signal SRS, an SPS SRS, and a grant-free PUSCH.

Optionally, the fourth uplink signal includes at least one of the following: periodic CSI, SPS CSI, a periodic sounding reference signal SRS, and an SPS SRS; and the fourth uplink signal does not include at least one of the following: a scheduling request SR and a grant-free PUSCH.

Optionally, the first downlink signal includes at least one of the following: a PDCCH for data scheduling, a periodic CSI-RS used for CSI measurement, an SPS PDSCH, and DCI in at least one of formats 2_0 to 2_5 carried on a PDCCH.

Optionally, the fifth signal includes at least one of the following: a CSI-RS used for RRM, RLM, a TRS, and beam management, and a PRS.

Optionally, the fifth signal includes at least one of the following: a CSI-RS used for radio resource management RRM, radio link monitoring RLM, and beam management, and a positioning reference signal PRS; and the fifth signal does not include a CSI-RS used for a TRS.

Optionally, the terminal device is in an RRC connected state.

Optionally, the terminal device is in an idle state, and the first downlink signal includes at least one of the following: a synchronization signal, system information, paging information, a common reference signal, and a common PDCCH;
the second uplink signal includes at least one of the following: RACH information, uplink wake-up information, and an uplink reference signal; and
the third signal includes at least one of the following: paging information and RACH information. Specifically, the third downlink signal includes the paging information, and the third uplink signal includes the RACH information.

Optionally, the third signal further includes at least one of the following: uplink wake-up information and an uplink reference signal.

In this embodiment, operations performed by the units in the communication apparatus are similar to those described in the terminal device in the embodiments shown in FIG. 1A to FIG. 11. Details are not described herein again.

In this embodiment, in a scenario in which the LP-WUS is combined with the DTX/DRX, the terminal device may communicate the third signal in the first active time period activated by the low-power wake-up signal, and even if the terminal device is outside the active time period for the cell DTX or the cell DRX, the terminal device may also communicate the third signal in the first active time period. Alternatively, it is understood as that a limitation of the cell DTX/DRX on signal transmission in the first active time period corresponding to the wake-up signal is removed, and power consumption of the terminal device, service experience, and power consumption of the network device are considered.

In another possible implementation, the communication apparatus 1200 is the network device in the embodiments shown in FIG. 1A to FIG. 11. In this case, functions of the units are as follows:
The transceiver unit 1201 is configured to send first configuration information and second configuration information, where the first configuration information is used to configure a time domain resource of a first active time period for receiving a low-power wake-up signal LP-WUS by a terminal device, the second configuration information is used to configure a time domain resource of a second active time period for discontinuous transmission DTX, and/or a time domain resource of a third active time period for discontinuous reception DRX, a first downlink signal is not received outside the second active time period, and a second uplink signal is not sent outside the third active time period.

The transceiver unit 1201 is further configured to send the LP-WUS in the time domain resource of the first active time period, where the LP-WUS is used to trigger the first active time period.

The transceiver unit 1201 is further configured to communicate a third signal in a first time period, where the first time period belongs to the first active time period, but does not belong to the second active time period or the third active time period.

Optionally, the third signal includes a third downlink signal and/or a third uplink signal.

That the transceiver unit 1201 is further configured to communicate the third signal in the first time period includes at least one of the following:

The transceiver unit 1201 is specifically configured to send the third downlink signal in the first time period, where the first time period does not belong to the second active time period.

The transceiver unit 1201 is specifically configured to receive the third uplink signal in the first time period, where the first time period does not belong to the third active time period.

Optionally, the transceiver unit 1201 is further configured to skip communicating a fourth signal in a second time period, where the second time period does not belong to the first active time period, but belongs to the second active time period or the third active time period. Alternatively, the processing unit 1202 is configured to determine not to communicate a fourth signal in a second time period.

Optionally, the fourth signal includes a fourth downlink signal and/or a fourth uplink signal.

That the transceiver unit 1201 is further configured to skip communicating the fourth signal in the second time period includes at least one of the following:
The transceiver unit 1201 is specifically configured to skip sending the fourth downlink signal in the second time period, where the second time period belongs to the second active time period.

The transceiver unit 1201 is specifically configured to skip receiving the fourth uplink signal in the second time period, where the second time period belongs to the third active time period.

Optionally, the transceiver unit 1201 is further configured to send a fifth signal in a third time period, where the third time period does not belong to the first active time period or the second active time period.

Optionally, the first downlink signal and the third downlink signal include at least a PDCCH for data scheduling.

Optionally, the first downlink signal and the third downlink signal further include at least one of the following: a periodic reference signal CSI-RS used for CSI measurement, an SPS PDSCH, and DCI in at least one of formats 2_0 to 2_5 carried on a PDCCH.

Optionally, the second uplink signal and the third uplink signal include at least one of the following: a scheduling request SR, periodic CSI, SPS CSI, a periodic SRS, and an SPS SRS.

Optionally, the first downlink signal and the fourth downlink signal include at least a physical downlink control channel PDCCH for data scheduling.

Optionally, the first downlink signal further includes at least one of the following: a periodic CSI-RS used for CSI measurement, an SPS PDSCH, and DCI in at least one of formats 2_0 to 2_5 carried on a PDCCH.

Optionally, the fourth downlink signal further includes at least one of the following: a periodic CSI-RS used for CSI measurement, an SPS PDSCH, and DCI in at least one of formats 2_0 to 2_5 carried on a PDCCH.

Optionally, the fourth downlink signal further includes at least one of the following: a periodic CSI-RS used for CSI measurement, and DCI in at least one of formats 2_0 to 2_5 carried on a PDCCH; and the fourth downlink signal does not include an SPS PDSCH.

Optionally, the fourth downlink signal does not include a PDCCH for data scheduling.

Optionally, the fourth downlink signal does not include at least one of the following: a periodic CSI-RS used for CSI measurement, an SPS PDSCH, and DCI in at least one of formats 2_0 to 2_5 carried on a PDCCH.

Optionally, the second uplink signal includes at least one of the following: a scheduling request SR, periodic CSI, SPS CSI, a periodic sounding reference signal SRS, an SPS SRS, and a grant-free PUSCH.

Optionally, the fourth uplink signal does not include at least one of the following: a scheduling request SR, periodic CSI, SPS CSI, a periodic SRS, an SPS SRS, and a grant-free PUSCH.

Optionally, the fourth uplink signal includes at least one of the following: a scheduling request SR, periodic CSI, SPS CSI, a periodic sounding reference signal SRS, an SPS SRS, and a grant-free PUSCH.

Optionally, the fourth uplink signal includes at least one of the following: periodic CSI, SPS CSI, a periodic sounding reference signal SRS, and an SPS SRS; and the fourth uplink signal does not include at least one of the following: a scheduling request SR and a grant-free PUSCH.

Optionally, the first downlink signal includes at least one of the following: a PDCCH for data scheduling, a periodic CSI-RS used for CSI measurement, an SPS PDSCH, and DCI in at least one of formats 2_0 to 2_5 carried on a PDCCH.

Optionally, the fifth signal includes at least one of the following: a CSI-RS used for RRM, RLM, a TRS, and beam management, and a PRS.

Optionally, the fifth signal includes at least one of the following: a CSI-RS used for radio resource management RRM, radio link monitoring RLM, and beam management, and a positioning reference signal PRS; and the fifth signal does not include a CSI-RS used for a TRS.

Optionally, the terminal device is in an RRC connected state.

Optionally, the terminal device is in an idle state, and the first downlink signal includes at least one of the following: a synchronization signal, system information, paging information, a common reference signal, and a common PDCCH;
the second uplink signal includes at least one of the following: RACH information, uplink wake-up information, and an uplink reference signal; and
the third signal includes at least one of the following: paging information and RACH information. Specifically, the third downlink signal includes the paging information, and the third uplink signal includes the RACH information.

Optionally, the third signal further includes at least one of the following: uplink wake-up information and an uplink reference signal.

In this embodiment, operations performed by the units in the communication apparatus are similar to those described in the network device in the embodiments shown in FIG. 1A to FIG. 11. Details are not described herein again.

In this embodiment, in a scenario in which the LP-WUS is combined with the DTX/DRX, the network device may communicate the third signal in the first active time period activated by the low-power wake-up signal, and even if the network device is outside the active time period for the cell DTX or the cell DRX, the network device may also communicate the third signal in the first active time period. Alternatively, it is understood as that a limitation of the cell DTX/DRX on signal transmission in the first active time period corresponding to the wake-up signal is removed, and power consumption of the terminal device, service experience, and power consumption of the network device are considered.

FIG. 13 is another diagram of a structure of a communication apparatus 1300 according to this application. The communication apparatus 1300 includes a logic circuit 1301 and an input/output interface 1302. The communication apparatus 1300 may be a chip or an integrated circuit.

The transceiver unit 1201 shown in FIG. 12 may be a communication interface. The communication interface may be the input/output interface 1302 in FIG. 13. The input/output interface 1302 may include an input interface and an output interface. Alternatively, the communication interface may be a transceiver circuit, and the transceiver circuit may include an input interface circuit and an output interface circuit. The processing unit 1202 shown in FIG. 12 may be the logic circuit 1301 in FIG. 13.

Optionally, when the communication apparatus is the terminal device in the foregoing embodiments, the logic circuit 1301 is configured to determine not to communicate a fourth signal in a second time period. The input/output interface 1302 is configured to: communicate a third signal with a network device in a first time period, skip communicating the fourth signal with the network device in the second time period, and communicate a fifth signal with the network device in a third time period.

Optionally, when the communication apparatus is the network device in the foregoing embodiments, the logic circuit 1301 is configured to determine not to communicate a fourth signal in a second time period. The input/output interface 1302 is configured to: communicate a third signal with a terminal device in a first time period, skip communicating the fourth signal with the terminal device in the second time period, and communicate a fifth signal with the terminal device in a third time period.

The logic circuit 1301 and the input/output interface 1302 may further perform other steps performed by the terminal device or the network device in any embodiment, and achieve corresponding beneficial effects. Details are not described herein again.

Optionally, the logic circuit 1301 may be a processing apparatus, and a part of or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field programmable gate arrays (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), another integrated chip, or any combination of the foregoing chips or processors.

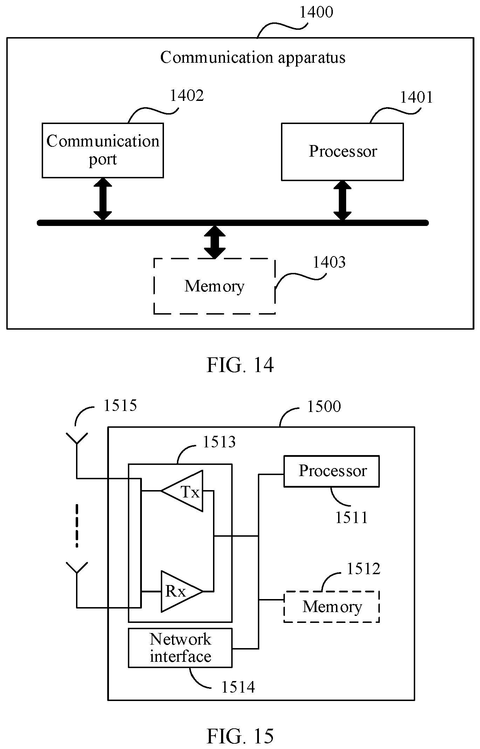

FIG. 14 shows a communication apparatus 1400 in the foregoing embodiments according to an embodiment of this application. The communication apparatus 1400 may be specifically a communication apparatus used as a terminal device in the foregoing embodiments.

In a diagram of a possible logical structure of the communication apparatus 1400, the communication apparatus 1400 may include but is not limited to at least one processor 1401 and a communication port 1402.

The transceiver unit 1201 shown in FIG. 12 may be a communication interface. The communication interface may be a communication port 1402 in FIG. 14. The communication port 1402 may include an input interface and an output interface. Alternatively, the communication port 1402 may be a transceiver circuit, and the transceiver circuit may include an input interface circuit and an output interface circuit.

It may be understood that the communication port 1402 in FIG. 14 may send an SRS signal in a beam switching manner and/or an antenna switching manner.

Further, optionally, the apparatus may further include at least one of a memory 1403 and a bus. In this embodiment of this application, the at least one processor 1401 is configured to perform control processing on an action of the communication apparatus 1400.

In addition, the processor 1401 may be a central processing unit, a general-purpose processor, a digital signal processor, an application-specific integrated circuit, a field-programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination including one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1400 shown in FIG. 14 may be specifically configured to implement steps implemented by the terminal device in the foregoing method embodiments, and achieve technical effects corresponding to the terminal device. For a specific implementation of the communication apparatus shown in FIG. 14, refer to the descriptions in the foregoing method embodiments. Details are not described herein again.

FIG. 15 is a diagram of a structure of a communication apparatus 1500 in the foregoing embodiments according to an embodiment of this application. The communication apparatus 1500 may be specifically a communication apparatus used as a network device in the foregoing embodiments. For a structure of the communication apparatus, refer to the structure shown in FIG. 15.

The communication apparatus 1500 includes at least one processor 1511 and at least one network interface 1514. Further optionally, the communication apparatus further includes at least one memory 1512, at least one transceiver 1513, and one or more antennas 1515. The processor 1511, the memory 1512, the transceiver 1513, and the network interface 1514 are connected, for example, connected through a bus. In this embodiment of this application, the connection may include various interfaces, transmission lines, buses, or the like. This is not limited in this embodiment. The antenna 1515 is connected to the transceiver 1513. The network interface 1514 is configured to enable the communication apparatus to communicate with another communication device over a communication link. For example, the network interface 1514 may include a network interface between the communication apparatus and a core network device, for example, an S1 interface. The network interface may include a network interface between the communication apparatus and another communication apparatus (for example, another network device or a core network device), for example, an X2 or Xn interface.

The transceiver unit 1201 shown in FIG. 12 may be a communication interface. The communication interface may be a network interface 1514 in FIG. 15. The network interface 1514 may include an input interface and an output interface. Alternatively, the network interface 1514 may be a transceiver circuit, and the transceiver circuit may include an input interface circuit and an output interface circuit.

The processor 1511 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control the entire communication apparatus, execute the software program, and process the data of the software program. The processor 1511 in FIG. 15 may integrate functions of the baseband processor and the central processing unit. A person skilled in the art may understand that the baseband processor and the central processing unit may alternatively be independent processors, and are interconnected by using a technology such as a bus. A person skilled in the art may understand that the communication apparatus may include a plurality of baseband processors to adapt to different network standards, the communication apparatus may include a plurality of central processing units to enhance a processing capability thereof, and components in the communication apparatus may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and the data. The memory 1512 may exist independently, and is connected to the processor 1511. Optionally, the memory 1512 may alternatively be integrated with the processor 1511, for example, integrated into a chip. The memory 1512 can store program code for executing the technical solutions in embodiments of this application, and the processor 1511 controls the execution. Various types of executed computer program code may also be considered as drivers of the processor 1511.

FIG. 15 shows only one memory and one processor. In an actual communication apparatus, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1513 may be configured to support receiving or sending of a radio frequency signal between the communication apparatus and the terminal. The transceiver 1513 may be connected to the antenna 1515. The transceiver 1513 includes a transmitter Tx and a receiver Rx. Specifically, the one or more antennas 1515 may receive a radio frequency signal. The receiver Rx of the transceiver 1513 is configured to: receive the radio frequency signal from the antenna, convert the radio frequency signal into a digital baseband signal or a digital intermediate frequency signal, and provide the digital baseband signal or the digital intermediate frequency signal for the processor 1511, so that the processor 1511 further processes the digital baseband signal or the digital intermediate frequency signal, for example, performs demodulation and decoding. In addition, the transmitter Tx of the transceiver 1513 is further configured to: receive a modulated digital baseband signal or digital intermediate frequency signal from the processor 1511, convert the modulated digital baseband signal or digital intermediate frequency signal into a radio frequency signal, and send the radio frequency signal through the one or more antennas 1515. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 1513 may also be referred to as a transceiver unit, a transceiver device, a transceiver apparatus, or the like. Optionally, a device that is in the transceiver unit and that is configured to implement a receiving function may be considered as a receiving unit. A device that is in the transceiver unit and that is configured to implement a sending function may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitter device, a transmitting circuit, or the like.

It should be noted that the communication apparatus 1500 shown in FIG. 15 may be specifically configured to implement steps implemented by the network device in the foregoing method embodiments, and achieve technical effects corresponding to the network device. For a specific implementation of the communication apparatus 1500 shown in FIG. 15, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the terminal device or the network device in the foregoing method embodiments.

An embodiment of this application further provides a communication system. The communication system includes the terminal device and the network device in any one of the foregoing embodiments.

In several embodiments provided in this application, it should be understood that the disclosed system, apparatus, and method may be implemented in other manners. For example, the described apparatus embodiments are merely examples. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the communication apparatus is a chip used in a terminal, the chip in the terminal implements functions of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the terminal chip sends information to a base station may be understood as that the information is first sent to another module (for example, a radio frequency module or an antenna) in the terminal, and then sent by these modules to the base station.

When the communication apparatus is a chip used in a base station, the chip in the base station implements functions of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of the embodiments may be implemented in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A communication method, wherein the method is applied to a terminal device, and the method comprises:
obtaining first configuration information and second configuration information, wherein the first configuration information is used to configure a time domain resource of a first active time period for receiving a low-power wake-up signal LP-WUS by the terminal device, the second configuration information is used to configure a time domain resource of a second active time period for cell discontinuous transmission DTX, and/or a time domain resource of a third active time period for cell discontinuous reception DRX, a first downlink signal is not received outside the second active time period, and a second uplink signal is not sent outside the third active time period;
receiving the LP-WUS based on the first configuration information, wherein the LP-WUS is used to activate the first active time period; and
communicating a third signal in a first time period, wherein the first time period belongs to the first active time period, but does not belong to the second active time period or the third active time period.

2. The method according to claim 1, wherein the third signal comprises a third downlink signal and/or a third uplink signal; and
the communicating the third signal in the first time period comprises at least one of the following:
receiving the third downlink signal in the first time period, wherein the first time period does not belong to the second active time period; and
sending the third uplink signal in the first time period, wherein the first time period does not belong to the third active time period.

3. The method according to claim 1 or 2, wherein the method further comprises:
skipping communicating the fourth signal in a second time period, wherein the second time period does not belong to the first active time period, but belongs to the second active time period or the third active time period.

4. The method according to claim 3, wherein the fourth signal comprises a fourth downlink signal and/or a fourth uplink signal; and
the skipping communicating the fourth signal in the second time period comprises at least one of the following:
skipping receiving the fourth downlink signal in the second time period, wherein the second time period belongs to the second active time period; and
skipping sending the fourth uplink signal in the second time period, wherein the second time period belongs to the third active time period.

5. The method according to any one of claims 1 to 4, wherein the method further comprises:
receiving a fifth signal in a third time period, wherein the third time period does not belong to the first active time period or the second active time period.

6. A communication method, wherein the method is applied to a network device, and the method comprises:
sending first configuration information and second configuration information, wherein the first configuration information is used to configure a time domain resource of a first active time period for receiving a low-power wake-up signal LP-WUS by a terminal device, the second configuration information is used to configure a time domain resource of a second active time period for discontinuous transmission DTX, and/or a time domain resource of a third active time period for discontinuous reception DRX, a first downlink signal is not received outside the second active time period, and a second uplink signal is not sent outside the third active time period;
sending the LP-WUS in the time domain resource of the first active time period, wherein the LP-WUS is used to trigger the first active time period; and
communicating a third signal in a first time period, wherein the first time period belongs to the first active time period, but does not belong to the second active time period or the third active time period.

7. The method according to claim 6, wherein the third signal comprises a third downlink signal and/or a third uplink signal; and
the communicating the third signal in the first time period comprises at least one of the following:
sending the third downlink signal in the first time period, wherein the first time period does not belong to the second active time period; and
receiving the third uplink signal in the first time period, wherein the first time period does not belong to the third active time period.

8. The method according to claim 6 or 7, wherein the method further comprises:
skipping communicating the fourth signal in a second time period, wherein the second time period does not belong to the first active time period, but belongs to the second active time period or the third active time period.

9. The method according to claim 8, wherein the fourth signal comprises a fourth downlink signal and/or a fourth uplink signal; and
the skipping communicating the fourth signal in the second time period comprises at least one of the following:
skipping sending the fourth downlink signal in the second time period, wherein the second time period belongs to the second active time period; and
skipping receiving the fourth uplink signal in the second time period, wherein the second time period belongs to the third active time period.

10. The method according to any one of claims 6 to 9, wherein the method further comprises:
sending a fifth signal in a third time period, wherein the third time period does not belong to the first active time period or the second active time period.

11. The method according to claim 2 or 7, wherein the first downlink signal and the third downlink signal comprise at least a physical downlink control channel PDCCH for data scheduling.

12. The method according to claim 11, wherein the first downlink signal and the third downlink signal further comprise at least one of the following: a periodic reference signal CSI-RS used for channel state information CSI measurement, an SPS scheduling SPS physical downlink shared channel PDSCH, and downlink control information DCI in at least one of formats 2_0 to 2_5 carried on a PDCCH.

13. The method according to any one of claim 2, 7, 11, or 12, wherein the second uplink signal and the third uplink signal comprise at least one of the following: a scheduling request SR, periodic channel state information CSI, SPS CSI, a periodic sounding reference signal SRS, and an SPS SRS.

14. The method according to claim 4 or 9, wherein the first downlink signal and the fourth downlink signal comprise at least a physical downlink control channel PDCCH for data scheduling.

15. The method according to claim 14, wherein the first downlink signal further comprises at least one of the following: a periodic CSI-RS used for CSI measurement, an SPS PDSCH, and DCI in at least one of formats 2_0 to 2_5 carried on a PDCCH.

16. The method according to claim 15, wherein the fourth downlink signal further comprises at least one of the following: a periodic CSI-RS used for CSI measurement, an SPS PDSCH, and DCI in at least one of formats 2_0 to 2_5 carried on a PDCCH.

17. The method according to claim 15, wherein the fourth downlink signal further comprises at least one of the following: a periodic CSI-RS used for CSI measurement, and DCI in at least one of formats 2_0 to 2_5 carried on a PDCCH; and the fourth downlink signal does not comprise an SPS PDSCH.

18. The method according to claim 4 or 9, wherein the fourth downlink signal does not comprise a PDCCH for data scheduling.

19. The method according to claim 18, wherein the fourth downlink signal does not comprise at least one of the following: a periodic CSI-RS used for CSI measurement, an SPS PDSCH, and DCI in at least one of formats 2_0 to 2_5 carried on a PDCCH.

20. The method according to any one of claims 4, 9, and 14 to 19, wherein the second uplink signal comprises at least one of the following: a scheduling request SR, periodic CSI, SPS CSI, a periodic sounding reference signal SRS, an SPS SRS, and a grant-free physical uplink shared channel PUSCH.

21. The method according to claim 20, wherein the fourth uplink signal does not comprise at least one of the following: a scheduling request SR, periodic CSI, SPS CSI, a periodic SRS, an SPS SRS, and a grant-free PUSCH.

22. The method according to claim 20, wherein the fourth uplink signal comprises at least one of the following: a scheduling request SR, periodic CSI, SPS CSI, a periodic sounding reference signal SRS, an SPS SRS, and a grant-free PUSCH.

23. The method according to claim 20, wherein the fourth uplink signal comprises at least one of the following: periodic CSI, SPS CSI, a periodic sounding reference signal SRS, and an SPS SRS; and the fourth uplink signal does not comprise at least one of the following: a scheduling request SR and a grant-free PUSCH.

24. The method according to claim 5 or 10, wherein the first downlink signal comprises at least one of the following: a PDCCH for data scheduling, a periodic CSI-RS used for CSI measurement, an SPS PDSCH, and DCI in at least one of formats 2_0 to 2_5 carried on a PDCCH.

25. The method according to claim 24, wherein the fifth signal comprises at least one of the following: a CSI-RS used for radio resource management RRM, radio link monitoring RLM, a tracking reference signal TRS, and beam management, and a positioning reference signal PRS.

26. The method according to claim 24, wherein the fifth signal comprises at least one of the following: a CSI-RS used for radio resource management RRM, radio link monitoring RLM, and beam management, and a positioning reference signal PRS; and the fifth signal does not comprise a CSI-RS used for a TRS.

27. The method according to any one of claims 1 to 26, wherein the terminal device is in an RRC connected state.

28. The method according to any one of claim 1, 2, 6, or 7, wherein the terminal device is in an idle state, and the first downlink signal comprises at least one of the following: a synchronization signal, system information, paging information, a common reference signal, and a common PDCCH;
the second uplink signal comprises at least one of the following: random access channel RACH information, uplink wake-up information, and an uplink reference signal; and
the third signal comprises at least one of the following: paging information and RACH information.

29. The method according to claim 28, wherein the third signal further comprises at least one of the following: uplink wake-up information and an uplink reference signal.

30. A communication method, wherein the method is applied to a network device, and the method comprises:
sending only one of first configuration information and second configuration information, wherein the first configuration information is used to configure a time domain resource of a first active time period for receiving a low-power wake-up signal LP-WUS by a terminal device, and the second configuration information is used to configure a time domain resource of a third active time period for cell discontinuous transmission DTX.

31. The method according to claim 30, wherein the method further comprises:
sending third configuration information when the first configuration information is sent, wherein the third configuration information is used to configure a time domain resource of a third active time period for discontinuous reception DRX.

32. A communication apparatus, comprising a module configured to perform the method according to any one of claims 1 to 31.

33. A communication apparatus, comprising at least one processor, wherein the at least one processor is configured to cause the communication apparatus to perform the method according to any one of claims 1 to 31.

34. A computer-readable storage medium, wherein the medium stores instructions, and when the instructions are run, the method according to any one of claims 1 to 31 is implemented.

35. A computer program product, comprising instructions, wherein when the instructions are run on a computer, the method according to any one of claims 1 to 31 is implemented.
